Europäisches Patentamt

European Patent Office

Office européen des brevets

(11) Publication number: **0 456 999 A2**

# EUROPEAN PATENT APPLICATION

(21) Application number: 91104670.4

(22) Date of filing: 25.03.91

(51) Int. Cl.⁵: **B65B 11/54**, B65C 9/18, G01G 19/415

(30) Priority: 24.04.90 JP 109342/90
01.05.90 JP 116416/90
28.05.90 JP 56357/90
25.09.90 JP 255929/90
26.10.90 JP 112301/90
28.11.90 JP 127239/90
30.11.90 JP 338321/90

(43) Date of publication of application:
21.11.91 Bulletin 91/47

(84) Designated Contracting States:
AT BE CH DE DK ES FR GB GR IT LI LU NL SE

(71) Applicant: ISHIDA SCALES MFG. CO., LTD.
44 Sanno-cho, Shogoin, Sakyo-ku
Kyoto-shi, Kyoto(JP)

(72) Inventor: Hirobe, Kenji
11-8, Nishishibukawa 1-chome
Kusatsu-shi, Shiga(JP)
Inventor: Takama, Naoki
11-2, Daido-cho
Ibaraki-shi, Osaka(JP)
Inventor: Takemura, Kazuhiko
89-9, Kunobe, Yasu-cho
Yasu-gun, Shiga(JP)

(74) Representative: Zmyj, Erwin, Dipl.-Ing.
Rosenheimer Strasse 52
W-8000 München 80(DE)

(54) Weighing-packaging-pricing apparatus.

(57) A weighing-packaging-pricing apparatus (50) has a film transporting devive (200) to pull a stretch film (60) to a packaging station (500), a weighing device (300) for weighing an object on a tray (75) to be packed, a lifter (400) which lifts the weighed object to the packaging station (500) and pushes it against the stretched film sheet, a folding device (600) for folding edge sections of the film sheet to form a package, a device for sealing (700) the edge sections, a control device (800) and a label printer assembly (900) for attaching a printed label on the package. The assembly is operated in coordination with the packaging operation by the apparatus and can be retracted from a normal operating position and, when it is so retracted, it is automatically switched to a manual mode of operation and the manner of issuing printed labels is changed accordingly. The control device (800) not only controls the overall operation of the apparatus, but also calculates a tare weight for a selected type of trays to be used, taking into account also the type of film used. The control device may also be programmed such that the number of trays for each type which have been used is updated at each cycle of packaging operation.

Fig 1

## Background of the Invention

This invention relates to a weighing-packaging-pricing apparatus for weighing an item such as fresh produce placed on a tray, packaging it by wrapping it together with the tray with a stretch sheet of polyethylene film or the like, and attaching thereto a price label showing its price.

So-called pre-packaged merchandises, such as fresh produce placed on a styrofoam tray and wrapped with a stretch film with the tray, are commonly available nowadays at supermarkets and elsewhere. Apparatus for producing such pre-packaged merchandises usually include a roll supporting device for rotatably supporting a roll of stretch film, a film transporting device for providing a film sheet of a desired size and holding it stretched for a packaging process, a weighing device for weighing items to be packaged including a tray, a lifter for lifting the weighed item and pressing it against a film sheet stretched above the lifter, a folding machine for folding the edge sections of the film sheet around the edges of the tray, and a sealing device for heating the folded edge sections of the film sheet. In addition, some apparatus are also provided with a label printer for printing the price of each packaged product on a label to be pasted thereon. It now goes without saying that there are many aspects in which prior art apparatus of this type are not sufficiently convenient.

For example, trays of different sizes are generally used with an apparatus of this type and the stretch film used for packaging must be cut to a correct size with respect to the tray. If the film is cut too short, it may not be able to enclose a loaded plate adequately. If it is too large with respect to the tray, on the other hand, excess portions of the film will protrude and adversely affect the appearance of the product. Japanese Patent Publication Tokko 1-51155 disclosed a method whereby operation data are preliminarily stored in a ROM of the control system corresponding to each film size such that the user can specify a desired film size to thereby retrieve corresponding data by which the film supplying and cutting devices can be operated. In order to use such a method, however, a large memory device would be required in order to take many different film sizes into account. If the user specified a film size which is not stored in the memory, it would be necessary to use data corresponding to the size closest to the specified size. This may significantly affect the accuracy.

Another important problem regarding an apparatus of this type is that of associating trays with the products. Since trays of different sizes may be used for the same product, inventory management of trays according to the product may not be accurate enough. The same product may be considered a different product when used with a different kind of tray but this method has the effect of increasing the number of codes to be used since more than one code may have to be assigned to the same product. The user's work becomes inconveniently complicated if different codes must sometimes be entered for the same product.

In connection with the pricing operation, it goes without saying that a correct tare weight must be subtracted from the measured total weights. Merchandises on trays may be weighed either before they are wrapped in a film piece of after they are enclosed in such a film piece. In other words, the tare weight may be represented either by the weight of the tray alone or by the combined weight of the tray and the film piece, but the size, hence the weight, of the film piece varies according to the length to which the stretch film is cut. Since there is a large number of different sizes and types of trays, it is cumbersome for the user to find a correct tare weight corresponding to a particular selected type of trays.

For situations where there are many customers, it has been known to prepare not only a tray master file containing various packaging data corresponding to trays of different types and a product master file containing names and unit prices of various products but also a customer master file for storing therein various data unique to each of the customers. With such a customer master file, the user has only to specify a product code number, a customer code number and a tray code number to retrieve various packaging data corresponding to a type of trays to be used for any specified customer. With prior art programs of this type, however, packaging conditions for trays to be used had to be set manually and, since different customers may use different trays for the same product, the user has to input different tray code numbers for different customers. If the user must enter more data, the probability of input errors also increases.

Regarding the device for attaching price labels on packaged goods, Japanese Patent Publications Tokkai 54-123391, 55-38217, 57-125125 and 60-52725, for example, disclosed combinations of a weighing-pricing apparatus and a label attaching device but these prior art label attaching devices were designed to attach label while the target product was traveling on a heat conveyor or being transported after the sealing process. For this reason, it was necessary to provide an object detector for detecting the presence or absence of the product and controlling the timing for label attaching operation, guides for controlling the orientation of the target product to be labeled, or a positioning device for holding the target product at a specified position and this means that the apparatus as a whole becomes complicated in structure and hence more expensive. If the label attaching operation is carried out during the course of transportation of the target product, in particular, an extra conveyor and the like may become necessary and the apparatus becomes even larger in scale.

Apparatus of a conventional type are inconvenient still in many other aspects. Firstly, since such price labels are usually attached somewhere near an edge of the target product, prior art label attaching devices had to be adjusted whenever products (or trays) of a different size are to be processed. In other words, the aforementioned guides and positioning device had to be adjusted for trays of different sizes. Secondly, labels with bar codes printed thereon are frequently attached to products in addition to labels of a conventional type showing their price, weight, etc. and, in such a situation, another label attaching device would be necessary. Thirdly, in the case where the target products to be labelled are fragile, it may be necessary to attach labels manually.

Summary of the Invention

It is therefore an object of the present invention to provide a weighing-packaging-pricing apparatus with which inventory of trays can be easily managed even if trays of different kinds are used for the same product.

It is another object of the present invention to provide a weighing-packaging-pricing apparatus with which the user does not have to calculate a tare weight for each of many film sizes and many tray sizes but can set a correct tare weight by a simple operation.

It is still another object of the invention to provide a weighing-packaging-pricing apparatus with which the user can automatically set correct packaging conditions even if different customers use trays of different types for the same product.

It is still another object of the invention to provide a weighing-packaging-pricing apparatus with an improved label printer including a label attaching device with which labels can be attached accurately without requiring the likes of guides or object detector.

It is still another object of the invention to provide a weighing-packaging-pricing apparatus with such a label printer which can still be made compact.

It is still another object of the invention to provide a weighing-packaging-pricing apparatus with a label-printing and label-attaching mechanism with which the orientation and position of attached labels can be freely adjusted.

It is still another object of the invention to provide such a weighing-packaging-pricing apparatus for which an inspection and maintenance work can be carried out easily.

It is still another object of the invention to provide such a weighing-packaging-pricing apparatus which can attach two kinds of labels, such as a label showing price and weight and another label with a bar code printed thereon, to each packaged product.

It is still another object of the invention to provide such a weighing-packaging-pricing apparatus which can be automatically switched between an automatic label-attaching mode of operation wherein printed labels are automatically attached to packaged products and a manual label-attaching mode of operation wherein labels are printed to be manually attached to the products.

It is still another object of the invention to provide such a weighing-packaging-pricing apparatus which can issue printed labels by right distances whether its label-issuing device is operated in an automatic or manual label-attaching mode of operation.

The above and other objects of the invention can be achieved by improving a prior art weighing-packaging-pricing apparatus in one or more of the following manners. An apparatus thus improved according to the present invention may be characterized as having a labeling device disposed directly above where a packaging device carries out its packaging operation such that a label can be attached to a target product where it is packaged and that the packaging operation by the packaging device and the label-attaching operation of the labeling device are coordinated. More particularly, there may be provided a pusher for pushing a packaged product to be discharged and a control device may be so programmed that the labeling operation is carried out in synchronism with the discharge operation by this pusher. And the labeling device may be made retractable such that it can be either at a position from which a label can be attached to a packaged product or a retracted position away therefrom. The control device in such a case may be so programmed that the labeling device is normally operated in an automatic operation mode, while it is operated in a manual operation mode if it is at the retracted position. The control device may be additionally so programmed as to control the distance by which printed labels are pushed out of the label printer, depending upon if they are to be picked up by a label-attaching device for an automatic label-

4

attaching operation or by a user in a manual mode of operation. Two sets of label-handling unit may be provided where it is desired to attach two differently printed labels on the packaged products such as a conventional price label and a label with a bar code printed thereon.

Where different types of trays and film are used, it is desirable to have a control device automatically calculate a proper tare value such that the net weight of the item on the tray can be easily ascertained as the basis for pricing. For this purpose, memory devices may be provided to store tare weight values of trays of different kinds and weights per unit length or area of different kinds of film such that a correct tare weight can be calculated and hence net weights of packaged products can be obtained accurately.

Where different customer groups use different kinds of trays for the same product, the control device may include areas for storing packaging conditions for each tray type, a plurality of tray types for each kind of items, and tray types for each customer group. After an item type and a customer group are specified, the control device retrieves tray types used by the specified customer group and selects a tray type used for the specified type of item by the specified customer group. Appropriate packaging conditions can be retrieved corresponding to the selected type of trays.

The control device for an apparatus for improved inventory management for trays may be so programmed as to collect updated data on the number of trays for each type which have been used.

Brief Description of the Drawings

The accompanying drawings, which are incorporated in and form a part of the specification, illustrate embodiments of the present invention and serve to explain the principles of the invention. In the drawings:

Fig. 1 is a front view of a weighing-packaging-pricing apparatus embodying the present invention;

Fig. 2 is a side view of the apparatus of Fig. 1 showing some of the devices inside;

Fig. 3 is a sectional view taken along the line 3-3 of Fig. 2 to show the structure of the film transportation device;

Fig. 4 is a sectional view taken along the line 4-4 of Fig. 1;

Fig. 5 is a view taken along the line 5-5 of Fig. 3;

Fig. 6 is a block diagram of a control system which may be used for the apparatus of Figs. 1-5, showing additional elements and components which may be connected thereto when used for apparatus of other types embodying the invention and described hereinbelow;

Fig. 7 is a schematic plan view showing the film which has just been fed;

Fig. 8 is a schematic plan view showing a film piece which has been transported to the packaging station;

Fig. 9 is a flow chart for the operation of the film transportation device according to the invention;

Figs. 10 - 13 are schematics showing files which are created in the RAM for the operation of a program embodying the invention;

Fig. 14 is a flow chart of the program;

Fig. 15 is a flow chart of subroutine "sum by mode" used in the program of Fig. 14;

Fig. 16 is a flow chart of subroutine "tray management" used in the program of Fig. 14;

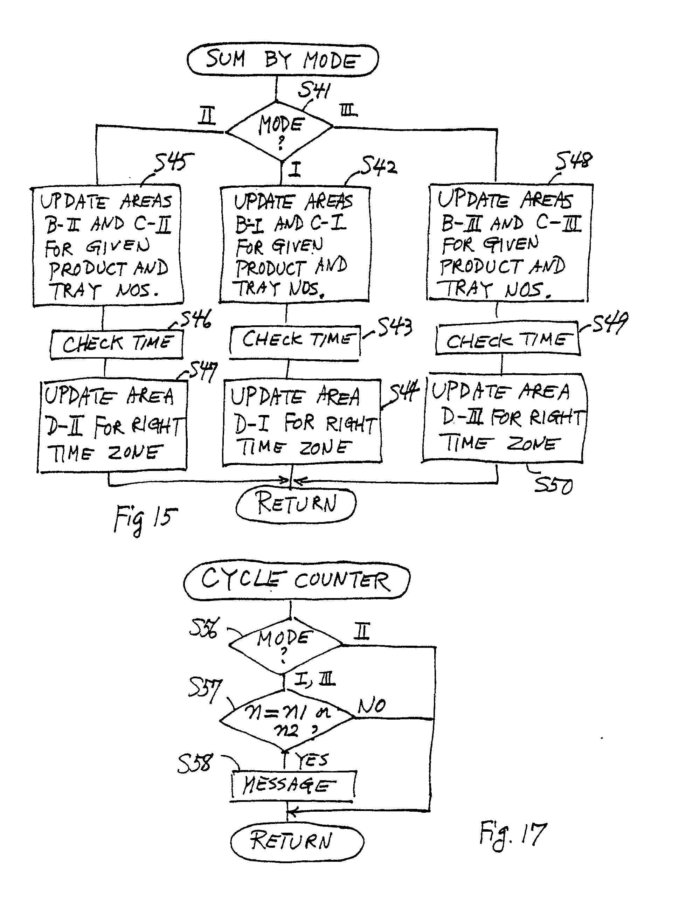

Fig. 17 is a flow chart of subroutine "cycle counter" used in the program of Fig. 14;

Figs. 18-24 are examples of displays (translated into English) that may be made in the program of Fig. 14;

Fig. 25 is a flow chart of a main program according to the invention for the CPU for calculating tare weights;

Fig. 26 is a schematic showing the structure of a product master file created in the initialization step of the program shown in Fig. 25;

Fig. 27 is a schematic showing the structure of a tray master file created in the initialization step of the program shown in Fig. 25;

Fig. 28 is a schematic showing the structure of a roll master file created in the initialization step of the program shown in Fig. 25;

Fig. 29 is a flow chart of a subroutine for calculating the tare weight of a film piece to be used in the main program of Fig. 25;

Figs. 30A and 30B are schematic side view showing the relationship between the height of a loaded plate and the length L to which the stretch film is cut;

Fig. 31 is a flow chart of another program according to the invention for efficiently retrieving packaging conditions for different customers who may use different trays for the same product;

Fig. 32 is a schematic showing the structure of a tray master file created in the initialization step of the program shown in Fig. 31;

Fig. 33 is a schematic showing the structure of a product master file created in the initialization step of the program shown in Fig. 31;

Fig. 34 is a schematic showing the structure of a customer master file created in the initialization step of the program shown in Fig. 31;

Fig. 35 is a sectional side view of a label printer assembly embodying the present invention together with a part of a weighing-packaging-pricing apparatus of the type described above;

Fig. 36 is a diagonal external view of the weighing-packaging-pricing apparatus of Fig. 35;

Fig. 37 is a front view of another weighing-packaging-pricing apparatus embodying the present invention with a label printer assembly according to a second embodiment of the present invention;

Fig. 38 is a sectional side view of the weighing-packaging-pricing apparatus of Fig. 37;

Figs. 39A and 39B are schematics for showing the label-attaching operation by the label printer assembly shown in Figs. 37 and 38;

Fig. 40 is a diagonal external view of another weighing-packaging-pricing apparatus with another label printer assembly according to a third embodiment of the invention;

Fig. 41 is a front view of the apparatus of Fig. 40;

Fig. 42 is a sectional side view of the apparatus of Figs. 40 and 41;

Fig. 43 is a diagonal view of a label printer assembly according to another embodiment of the present invention when it is in opened condition;

Fig. 44 is an enlarged view of the label removing device of Figs. 35, 38 and 42;

Fig. 45 is a diagram for explaining the control of motion of the sheet in the label printer when the sheet is advanced by a fixed distance;

Fig. 46 is a diagram for explaining the control of motion of the sheet in the label printer when operation is switched from automatic to manual mode;

Fig. 47 is a schematic view of the label removing device in a manual mode of operation; and

Fig. 48 is a diagram for explaining the control of motion of the sheet in the label printer when operation is switched from manual to automatic mode.

Detailed Description of the Invention

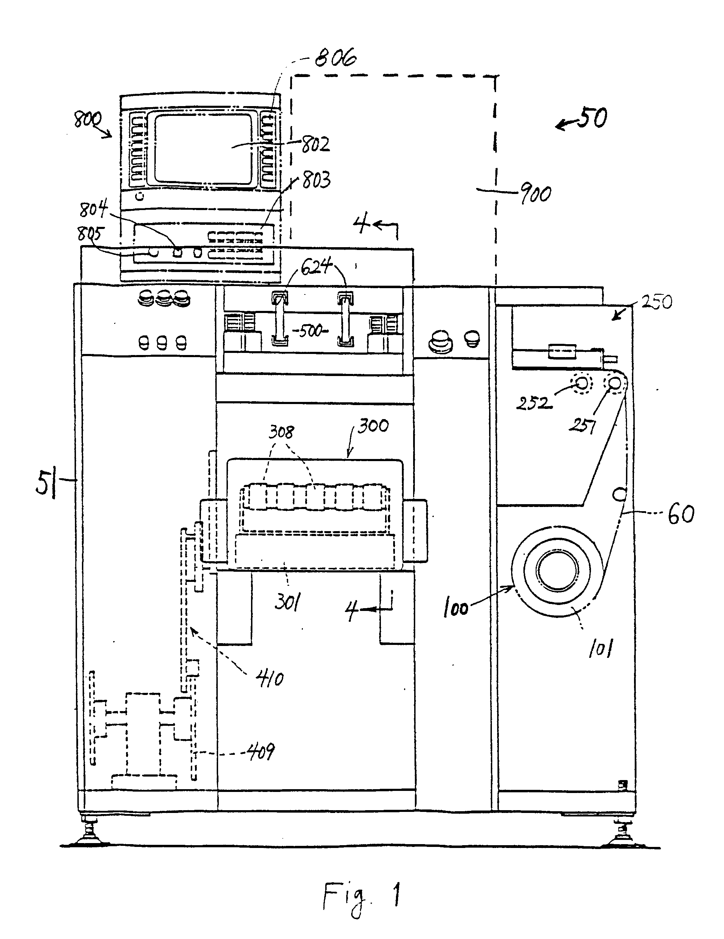

As shown in Figs. 1 - 5, a weighing-packaging-pricing apparatus 50 embodying the present invention is comprised of a roll supporting device 100, a film transporting device 200, a weighing device 300, a lifter 400, a packaging station 500, a folding device 600, a sealing device 700, a control device 800 and a label printer assembly 900. The weighing device 300 is in front at the center of the main housing 51 of the apparatus 50. The roll supporting device 100 is disposed in one side section of the main frame 51 and rotatably supports a film roll 101 around which a stretch film 60 of a specified width is wound many times. The film transporting device 200 is for clamping both side edge sections of the film 60 pulled out of the roll supporting device 100 to transport it to the packaging station 500 formed above the weighing device 300 inside the main housing 51. The lifter 400 is for receiving from the weighing device 300 a tray 75 loaded with an item 70 such as fresh produce and lifting it to the packaging station 500. The folding device 600 is for using a film piece transported to the packaging station 500 to package the item 70 and the tray 75 together. The sealing device 700 is disposed above the weighing device 300 and in front of the packaging station 500 and is for thermally sealing edge parts of the film 60 which have been folded towards the bottom of the tray 75 by the folding device 600. The control device 800, equipped with a console box 801 with a display device 802 and a keyboard 803, is on the top surface of the main housing 51 and not only controls the operations of the weighing device 300, the film transporting device 200, the lifter 400, the folding device 600 and the sealing device 700 but also calculates the price of the item 70 on the basis of a signal indicative of its weight measured by the weighing device 300.

The label printer assembly 900 includes a label printer for printing the weight, price, etc. of the packaged product on a label. A label attaching device (to be described in detail below) is formed unistructurally with the label printer and made of part of the label printer assembly 900. A mode selection switch 806 on the control device 800 may be operated to switch from one to another of the modes of operation of the apparatus 50. Selectable modes of operation of the apparatus 50 include the weighing-packaging-pricing mode (Mode I) wherein the weighing device 300, the folding device 600, the sealing device 700 and the label printer assembly 900 are operated so that the product to be packaged can be weighed, packaged and priced in one series of action, the weighing-pricing mode (Mode II) wherein the weighing device 300 and the label printer 900 are operated for weighing an already packaged product and determining its price, and the packaging mode (Mode III) wherein the folding device 600 and the sealing device 700 are operated such that only the packaging process is effected without calculating the product's price.

Next, the film transportation device 200 for supplying film pieces to the packaging station 500 will be described in some detail.

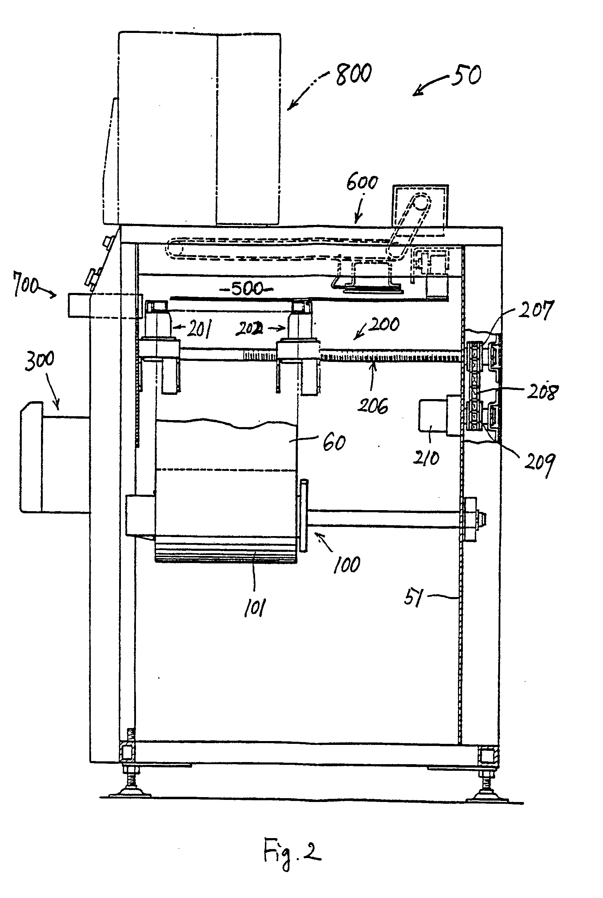

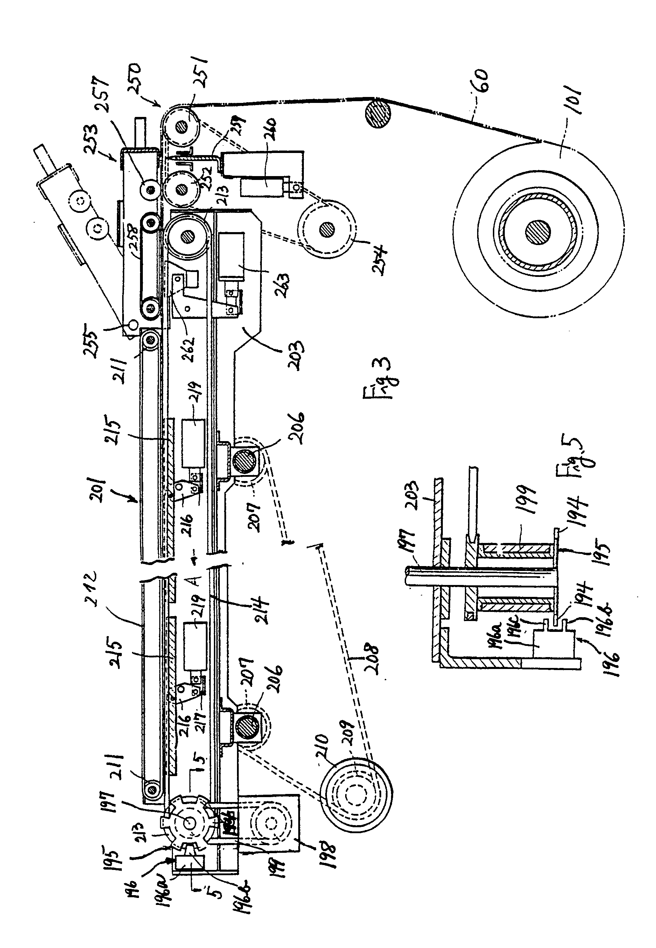

The film transporting device 200, which also includes a film feeding unit 250 on its upstream side above the roll supporting device 100, is comprised of a fixed film transporting unit 201 and a movable film transporting unit 202 as shown in Figs. 2 and 3. The fixed film transporting unit 201 is disposed above one edge part (the left-hand edge as seen in Figs. 2 and 3) of the film roll 101 supported rotatably in the roll supporting device 100 and serves to clamp one side edge part of the film 60 pulled out of the film roll 101 and to guide the film 60 to the packaging station 500. The movable film transporting unit 202 is disposed above the other edge part (the right-hand edge as seen in Figs. 2 and 3) of the film roll 101 and serves to clamp the side edge part of the film 60 pulled out of the film roll 101 and to similarly guide the film 60 to the packaging station 500.

In Figs. 2 and 3, numeral 203 indicates a frame for the fixed film transporting unit 201. A pair of slidable members 204 is attached to the bottom surface of this frame 203 through brackets 205 and respectively engages a pair of screw shafts 206 which are rotatably supported by the main housing 51. A sprocket 207 is secured to one end of each of these screw shafts 206. These sprockets 207 are connected by a chain means 208 with a sprocket 209 affixed to one end of the drive shaft of a screw-shaft motor 210 such that, when the screw shafts 206 are rotated by the operation of the screw-shaft motor 210, the pair of slidable members 204 slides along the screw shafts 206 and the movable film transporting unit 202 moves as a whole in the axial direction of the screw shafts 206. Thus, the separation between the movable film transporting unit 202 and the fixed film transportation unit 201 can be adjusted appropriately by operating the screw-shaft motor 210 according to the width of the film roll 101 being used. The fixed film transportation unit 201, on the other hand, is supported by these screw shafts 206 and secured to the main housing 51. Besides the above, however, the fixed film transporting unit 201 and the movable film transporting unit 202 are structured nearly identically. In what follows, therefore, the structure of the fixed film transporting unit 201 will be described and the structure of the movable film transporting unit 202 will not be separately présented.

As shown in Fig. 3, the frame 203 of the fixed film transporting unit 201 rotatably supports a pair of (upper film-transporting) pulleys 211 between which a timing belt (hereinafter referred to as the upper transport belt 212) is stretched in the direction of transportation of the film 60 (indicated by the arrow A) and another pair of (lower film-transporting) pulleys 213 between which another timing belt (hereinafter referred to as the lower transport belt 214) is stretched parallel to and below the upper transport belt 212. One of the pulleys 213 (with its shaft indicated by numeral 197) is connected to a motor (belt-driving motor 198) through a timing belt 199 such that, if this motor 198 is rotated in the counter-clockwise direction, the film 60 sandwiched between the upper transport belt 212 and the lower transport belt 214 will be transported in the direction of the arrow A towards the packaging station 500.

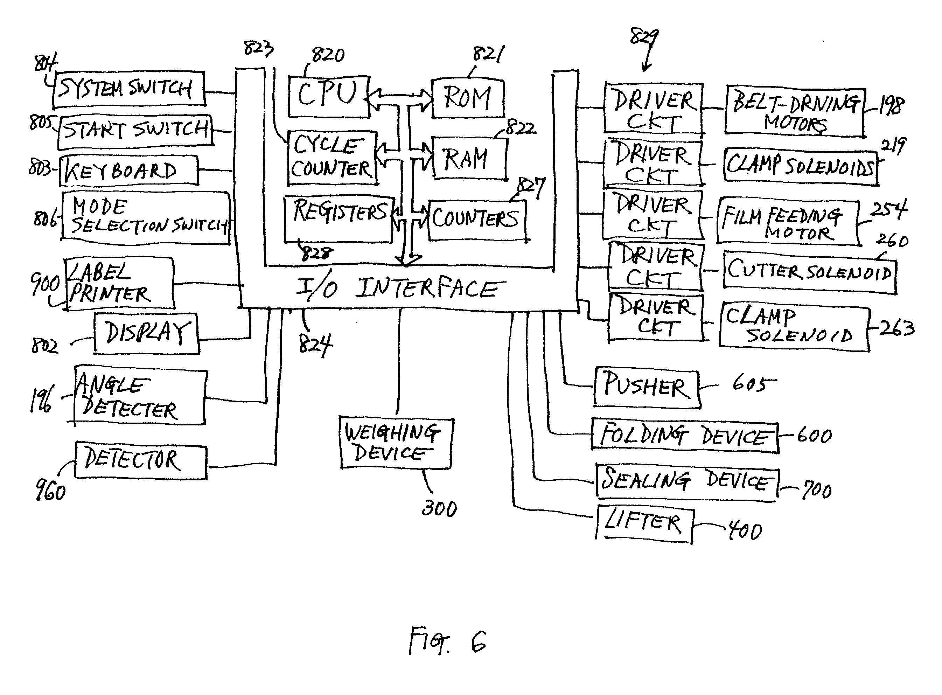

An angle detector 196 for monitoring the motion of the shaft 197 is disposed near one end of this shaft 197 as shown in Fig. 5. The angle detector 196 is comprised of a housing 196a secured to the frame 203 through a stay and a pair of sensors 196b and 196c protruding from the housing 196a. A disk 195 with six radially protruding pieces 194 is attached to the end of the shaft 197 opposite to the sensors 196b and 196c so as to rotate with the shaft 197 between the sensors 196b and 196c. Each of these protruding pieces 194 subtends an angle of $30°$ at the center of the disk 195 and mutually separated by $30°$ such that these pieces 194 pass between the sensors 196b and 196c, when the shaft 197 rotates, at phase differences of $60°$. Whenever one of these pieces 194 passes between the sensors 196b and 196c, the output voltage from the angle detector 196 is affected and a pulse signal is outputted such that the angle of rotation of the shaft 197 can be measured by counting these pulse signals from the angle detector 196.

Fig. 3 also shows a plurality of clamping members 215 below the lower transport belt 214 along the direction of the arrow A. Each of these clamping members 215 is attached to the top part of one of a plurality of swing levers 216 which are supported by the frame 203 so as to be able to swing with respect thereto. Each swing lever 216 is connected through a connector 217 to a clamp solenoid 219 attached to the main frame 51. If the solenoids 219 are activated, the connector members 217 move forward and cause the clamping members 215, through the swing levers 216, to move upwards to push the lower transport belt 214 into the clamping position, pressing upward against the upper transport belt 212. If the clamp solenoids 219 are deactivated when the clamping members 215 are in the clamping position, the swing levers 216 are caused by the connectors 217 to swing in the reverse direction and the clamping members 215 are separated from the lower transport belt 214 to the non-clamping position. When the film 60, after it is cut to a desired length as will be explained below, is transported towards the packaging station 500, the clamping members 215 are in the clamping position such that the lower transport belt 214 is tightly in contact with the upper transport belt 212, securely sandwiching therebetween the side edge part of the film 60. As explained above, the movable film transporting unit 202 is similarly structured, having clamping members which can be set in a clamping position. Thus, both side edge sections of the film 60 are held securely between the upper and lower transport belts of the two film transporting units 201 and 202 as the film 60 is transported to the packaging station 500.

The film transporting device 200 also includes a film feeding unit 250 disposed above the roll supporting device 100 for leading the front edge of the film 60 from the film roll 101 to the space between the upper and lower transport belts 212 and 214 of both the fixed and movable film transporting units 201 and 202. The film feeding unit 250 includes a pair of feed rollers 251 and 252 and a film holder 253. The feed rollers 251 and 252 are driven by a film feeding motor 254 and serve to pull the film 60 out of the film roll 101. The film holder 253 is disposed above the pair of feed rollers 251 and 252 and is rotatable around a support axis 255 so as to be able to assume both a closed position and an open position shown respectively by solid lines and broken lines in Fig. 3. The film holder 253 is provided with a compression roller 257 which, when the film holder 253 is in its closed position, compresses the feed rollers 252 on the downstream side so as to press the film 60 thereagainst and a feeder belt 258 which, when the film holder 253 is in its closed position, contacts the lower transport belts 214 of both the fixed and movable film transporting units 201 and 202 so as to secure the film 60 in between. The film feeding unit 250 is further provided with a cutter (or a perforator) 259 which is disposed between the pair of feed rollers 251 and 252 and adapted to be activated by a cutter solenoid 260 to move upward and to thereby perforate the film 60 in the direction of its width (that is, perpendicular to the arrow A).

Below the lower transport belt 214 and opposite the feeder belt 258, there is provided another clamping member 262 adapted to be activated by a clamp solenoid 263 for clamping both side edge parts of the film 60. The feeder belt 258 is supported by means of a spring (not shown) so as to be movable upward and downward. When the film feeding unit 250 is in the open position, the feeder belt 258 is in a floated position shown and serves, in this floated position, to guide the leading front edge of the film 60 from the roll supporting device 100 onto the feed rollers 251 and 252.

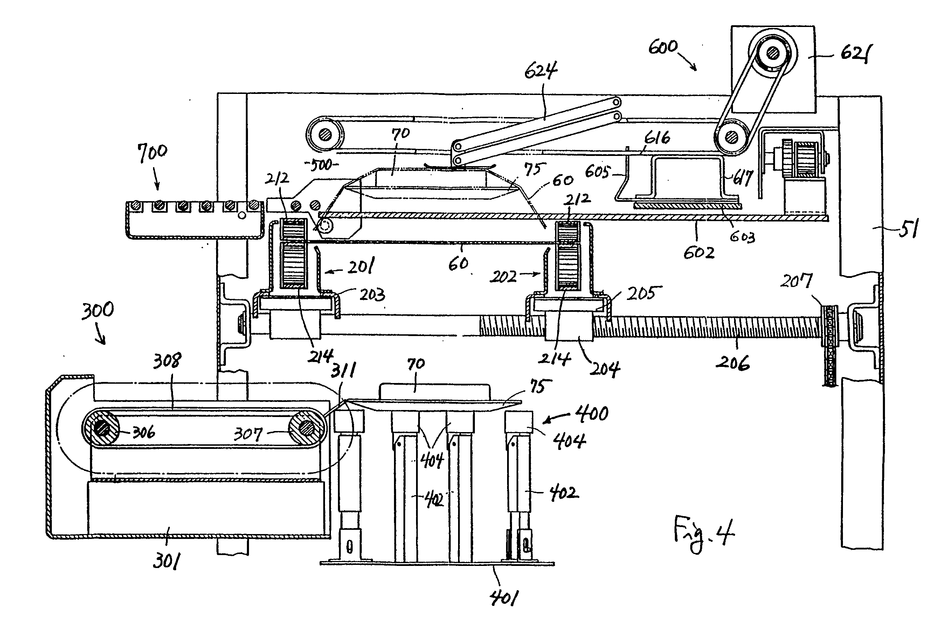

As shown in Fig. 4, the lifter 400 for lifting weighed products is disposed directly below the packaging station 500 to which the fixed and movable film transporting units 201 and 202 cooperate to transport a film piece. The folding device 600 for packaging the weighed products is above the packaging station 500. The weighing device 300 has a weighing machine 301 and a plurality of conveyor belts 308 stretched between a pair of rollers 306 and 307. Each conveyor belt 308 has a pusher 311 such that a loaded tray, when placed on the conveyor belts 308, is weighed by the weighing machine 301 and then pushed by the pushers 311 to the lifter 400. The lifter 400 has a plurality of legs 402 erected on a lifter base 401. Each leg 402 has a support head 404 at the top which is rotatably connected to the leg 402. The lifter base 401 can be vertically moved upwards and downwards by means of a driving motor (not indicated) through a cam 409 and a linking mechanism 410. When a loaded tray is thereby lifted, it presses a film piece stretched in the transverse direction at the packaging station 500 by the upper and lower transport belts 212 and 214 of the fixed and movable film transporting units 201 and 202.

The folding device 600 serves to wrap up the product brought up to the packaging station 500 together with the tray. As shown in Fig. 4, the folding device is comprised of a pair of side folding plates 602 disposed in the transverse direction of the film piece, a back folding plate 603 disposed above and perpendicularly to the side folding plates 602 and a discharge pusher 605 disposed above the back folding plate 603. The side folding plates 602 are adapted to move towards or away from each other in the longitudinal direction of the film piece. The back folding plate 603 is adapted to move backward and forward in the transverse direction of the film piece. The discharge pusher 605 is also adapted to move in the transverse direction of the film piece. Numeral 621 indicates a motor for driving the discharge pusher 605 attached to a timing belt 616 through a bracket 617.

With a loaded tray at the packaging station 500, the folding plates 602 and 603 serve to fold the edge parts of the stretched film piece 60 downward towards the bottom surface of the tray 75. The discharge pusher 605 is operated with an appropriate delay so as to push the packaged product forward towards the sealing device 700 in front of the packaging station 500. The sealing device 700 serves to thermally seal the edge parts of the film piece folded against the bottom surface of the tray 75. In Fig. 4, numeral 624 indicates a pair of rotatably supported means for contacting the top surface of the package to prevent it from moving upward excessively.

Next, some of the functions of the control device 800 are described. As schematically shown in Fig. 6, the control device 800 is comprised of a central processing unit (CPU) 820 with which the control device 800 calculates the price of each packaged product and also generally controls the operations of the apparatus 50 as a whole, a read-only memory device (ROM) 821 storing operation programs, a random-

8

access memory device (RAM) 822 for temporarily storing the results of operations and data of various types, a cycle counter 823 (to be explained below), and an input-output interface 824 of a known kind. Various counters 827 and registers 828 as well as driving circuits 829 for the motors 198 and 254 and solenoids 219, 260 and 263 may be considered parts of the control device 800. Signals of various types such as those from the keyboard 803, the angle detector 196, the system switch 804 for switching the entire system on and off, a start switch 805 for starting the packaging operation of the apparatus 50 and the mode selection switch 806 for selecting a mode of operation as explained above are received by the CPU 820 through the interface 808.

Next, let us consider a situation where trays of different sizes are used with the apparatus. Since the length L of the film piece must be properly selected, the user measures the length T of the trays to be used and visually estimates the height H of the loaded tray. When these values are key-inputted from the keyboard 803, the CPU 820 uses a formula $L = \alpha T + \Delta T$ stored in the ROM 821 to calculate the value of L where $\alpha T$ may be considered the basic term, $\Delta T$ representing a correction term needed according to the magnitude of H. The coefficient $\alpha$ is determined by the physical characteristics of the film and the tension. As H increases, $\Delta T$ also increases to make L larger. If the loaded item does not protrude above the edge of the tray, on the other hand, $\Delta T = 0$ and the length L will be determined by the first term $\alpha T$ alone.

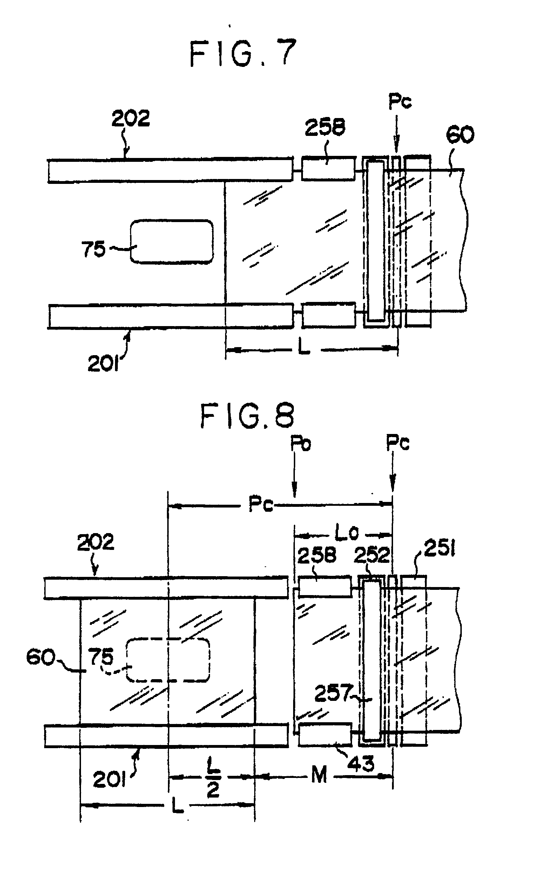

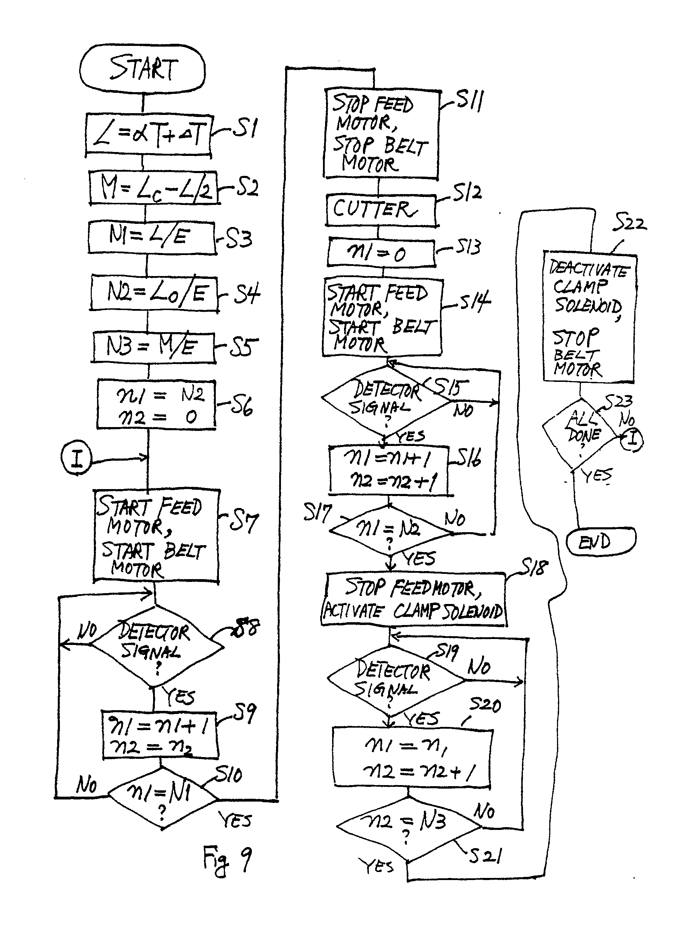

When the cutter solenoid 260 is activated to make perforations on the stretch film 60, the front edge of the film 60 should be at a distance L from the position of the cutter 259 indicated by $P_c$ in Fig. 7. Distance traveled by the stretch film 60, however, is measured in terms of the angle of rotation of the shaft 197 by the angle detector 196. If the distance traveled by the stretch film 60 between two consecutive pulse signals from the angle detector 196 is denoted by E, the number of pulses to be counted is L/E from the moment perforations are made to the moment when the stretch film 60 reaches the position shown by Fig. 7.

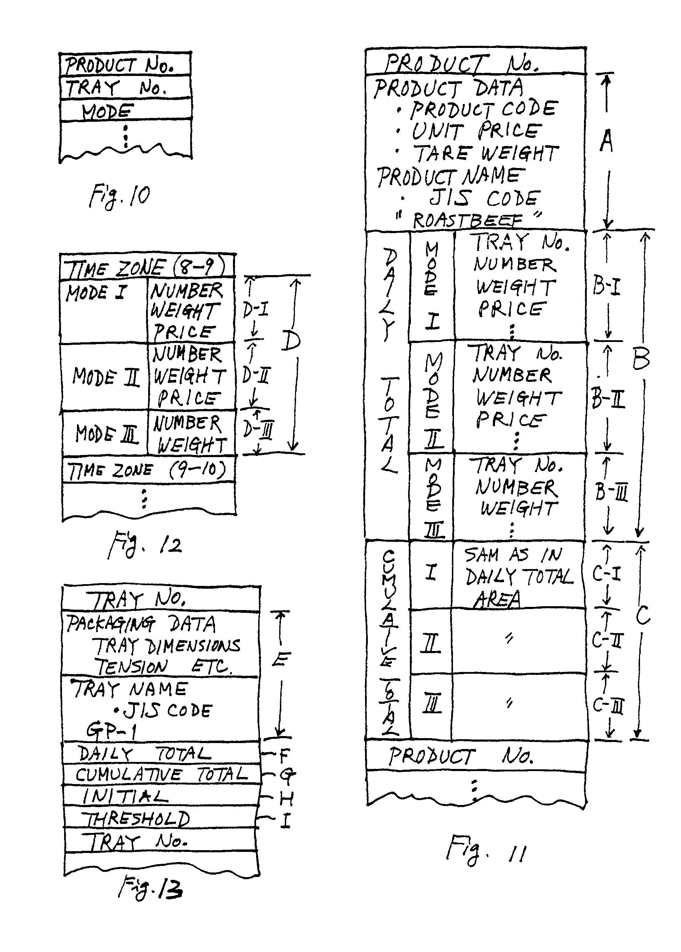

After the stretch film 60 is cut to the correct length, it is desirable to transport the separated film piece by a right distance such that, when it reaches the packaging station 500, its center coincides exactly with the center of the tray 75 which is lifted up thereagainst by the lifter 400 as shown in Fig. 8. Let $L_c$ now indicate the distance between the center of the tray 75 and the cutter position $P_c$. Then the distance M by which the film piece 60 should be moved from $P_c$ to the desired position in the packaging station 500 is given by $M = L_c - L/2$ as can be easily understood by studying Fig. 8. This distance corresponds to the pulse number of M/E to be counted.

As will be explained immediately below, the front edge of the stretch film 60 which has been perforated by the cutter 259 is not at the position $P_c$ of the cutter 259 but at an offset position $P_0$ immediately downstream of the feeder belt 258 as shown in Fig. 8. In counting the pulse numbers, therefore, the distance $L_0$ (called the offset distance) between $P_c$ and $P_0$ must be properly taken into account.

Fig. 9 is a flow chart of a program according to which the film transportation device 200 may be operated in view of the above consideration after the user enters the values of T and H as explained above. As initialization, values L and M are calculated (S1 and S2) by using formulas stored in the ROM 821. Cutter count number N1, offset count number N2 and film shift count number N3 are calculated respectively from L, $L_0$ and M by dividing them by E (S3, S4 and S5) and are stored in the registers 828. The offset count number N2 is set in one of the counters 827 (= first counter n1) and another counter (= second counter n2) is reset (S6). After the initialization is completed, the film feeding motor 254 and the belt-driving motors 198 are both started (S7). This causes the feed rollers 251 and 252 of the film feeding unit 250 to start rotating such that the stretch film 60 is pulled out of the film roll 101 and its front edge is led to the film transportation device 200. At the same time, the belt-driving motors 198 cause the lower transport belts 214 of the fixed and movable film transporting units 201 and 202 to start moving in synchronism. Thus, the front edge of the stretch film 60 is inserted under the upper transport belts 212. Although not indicated in the flow chart of Fig. 9, the clamping members 215 are maintained in the clamped condition such that the stretch film 60 inserted between the upper and lower transport belts 212 and 214 are tightly clamped in between and transported towards the packaging station 500.

As the clamped stretch film 60 begins to move towards the packaging station 500, the angle detector 196 begins to transmit pulse signals to the CPU 820 (S8). The number n1 in the first counter is incremented each time a pulse signal is received from the angle detector 196 but the number n2 in the second counter is held constant (S9). When the number n1 of the first counter reaches the cutter count number N1 (YES in S10), the film feeding motor 254 and the belt-driving motors 198 are both stopped (S11). This means that the film 60 has advanced by (L - $L_0$) and the cutter solenoid 290 is then activated (S12) to make perforations on the film 60. After the cutter 259 moves back to its original downwardly retracted position and the first counter is reset (S13), the film feeding motor 254 and the belt-driving motors 198 are both started again (S14). This time, both counter numbers n1 and n2 are incremented by the pulse signals from the angle detector 196 (S15 and S16) and when the first counter counts the offset count number N2 (YES in S17), the film feeding motor 254 is stopped and the clamp solenoid 263 is activated (S18). At this moment, the perforations are at the offset position $P_0$ and since the stretch film 60 is being clamped by the clamping member 262 on the downstream side of the perforations while the belt-driving motors 198 are still running, the film 60 is torn along the perforations to produce a film piece of the desired length L.

Thereafter, the first counter n1 is made to hold the current count number (= N2) (S19 and S20) and when the second counter n2 counts the film shift count number N3 (YES in S21), the clamp solenoid 263 is deactivated and the belt-driving motors 198 are stopped (S22). At this moment, the separated film piece transported between the upper and lower transport belts 212 and 214 is at the position shown in Fig. 8. The loop S7 - S22 is repeated unless a command to end has been entered (S23).

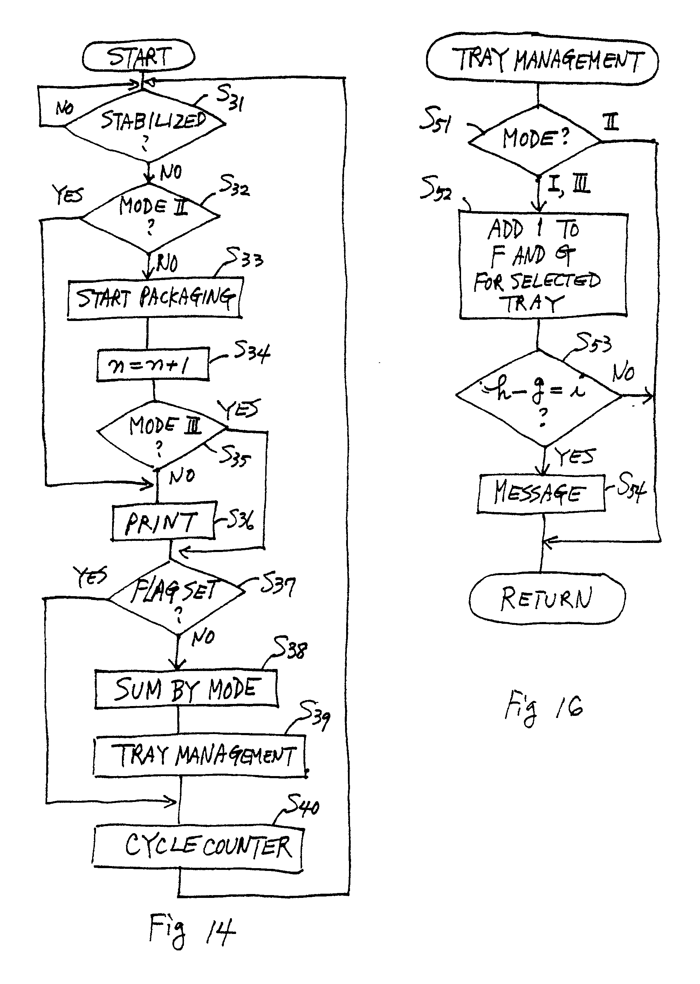

Next, another program embodying the invention which is convenient for inventory management of trays is described by way of an example. According to this exemplary program, as soon as the system switch 804 is switched on, the CPU 820 creates in the RAM 822 a reference area as shown in Fig. 10, a product master file as shown in Fig. 11, a time zone file as shown in Fig. 12 and a tray management file as shown in Fig. 13. The reference area is for registering the code number of the product being packaged when the apparatus 50 is in operation, the tray code number for showing the type of trays being used and the mode of operation which has been selected. The product master file has a product header area A, a daily total area B and a cumulative total area C for each product code number. The product header area A is for storing product data on the corresponding product such as its product code number, unit price and a descriptive name like "roast beef" or a JIS (Japanese Industrial Standards) code. Each daily total area B is comprised of a data collecting area B-I for entering the tray code number, the number of such trays which have been processed and the total sum for the day if Mode I has been selected, another data collecting area B-II for entering the tray code number, the number of such trays which has been processed and the total sum for the day if Mode II has been selected, and still another data collecting area B-III for entering the tray code number and the number of such trays which has been processed for the day if Mode III has been selected. Each cumulative total area C is similarly comprised of data collecting areas C-I, C-II and C-III. The time zone file is divided into time zone areas D each representing a different time zone such as from 8 am to 9 am and from 9 am to 10 am. Each time zone area D is further divided into data collecting areas D-I, D-II and D-III for storing the number of packages processed, weight and price (not for D-III) during the corresponding time zone when the operation has been in Mode I, Mode II and Mode III, respectively. The tray management file has for each tray code number a tray header area E for storing packaging data such as the tray dimensions and film tension and characteristic data such as tray name, for example, in JIS code, a daily total area F for the daily total number of used trays, a cumulative total area G for storing the cumulative total number of used trays, an initial number area H for storing the number of trays initially available and a threshold area I for storing a threshold number such that a warning will be given, as will be described below, when the number of remaining trays of this kind drops to this threshold number.

After these files are created in the RAM 822, as explained above by way of Figs. 10-13, the CPU 820 causes the display device 802 to display a menu, telling the user to enter conditions of operation. If the user responds by selecting a mode of operation, a product code number and a tray code number, the CPU 820 sets a code representing the selected mode of operation in the reference area and then examines whether the selected tray code number appears in preset data corresponding to the selected product code number. If such a tray code number is found to be preset, both the selected product code number and the selected tray code number are also set in the reference area. If the selected tray code number does not exist in the preset data, the selected product and tray code numbers are set in the reference area as "option" and the initialization process of the program is finished.

Let us assume, as an example, that the user selects Mode I as the mode of operation, "23" as the product number for roast beef and "32" as the tray number. Then, codes corresponding to Mode I, "23" and "32" are set in the reference area. If the user thereupon switches on the start switch 805, the main program is carried out as shown by the flow chart of Fig. 14. After the CPU 820 ascertains that the weighing machine 301 has stabilized (YES in S31), the normal packaging process is carried out (S33) because Mode I has been selected (NO in S32). The conveyor belts 308 of the weighing device 300 carries the weighed product to the lifter 400 which, in turn, lifts it to the packaging station 500. The folding device 600 wraps it up with a film piece stretched at the packaging station between the fixed and movable film transporting units 201 and 202 and the discharge pusher 605 pushes the packaged product forward to the sealing device 700 to have the edge parts of the film piece thermally sealed under the bottom surface of the tray 75. The number n in the cycle counter 823 is then increased by 1 (S34).

Since the operation is in Mode I according to this example (NO in S35), the CPU 820 calculates the price on the basis of the weight measured by the weighing machine 301 and causes the label printer 900 to print the price and other data taken from the product header area A of the product master file (S36).

According to a preferred embodiment of the invention, the apparatus 50 is prepared for test runs for the purpose of ascertaining that every constituent part is functioning normally. When such simulation runs are carried out, however, the number of times for such runs must be discounted in summing up the total number of products that have been packaged. For this purpose, the control device makes use of a normally reset flag which is set when a simulation run is carried out. This flag is set also by the CPU 820, for example, when there is a malfunction and an error signal has been received thereby. In such a situation, an error message is also displayed on the display device 802.

Upon ascertaining that this normally reset flag is not set (NO in S37), the CPU 820 performs three subroutines (to be described below) to update the files in the RAM 822, check the inventory of trays and to ascertain if the apparatus 50 does not need a maintenance work. If the flag is set (YES in S37), the first of these three subroutines is skipped. In the case of an operation in Mode II (that is, when a code representing Mode II is set in the reference area), there is no packaging work involved and hence Steps S33 - S35 are skipped and, as will be described below, the number n in the cycle counter 823 is not incremented. In the case of an operation in Mode III, there is no calculation of price or printing of labels to be required and hence Step S36 is skipped.

The "sum by mode" subroutine, which is carried out as Step 38 in the flow chart of Fig. 14, is for updating the files in the RAM 822 according to the mode of operation. As shown in Fig. 15, the mode is first ascertained in this subroutine (S41). If the operation has been in Mode I as in this example, the numbers in areas B-I and C-I corresponding to the product and tray type in the product master file shown in Fig. 11 are updated (S42). Thereafter, the CPU 820 checks the current time from the pulse signals from a clock circuit (not shown) in a known manner (S43) and, having ascertaining the current time zone, updates the number in area D-I of the time zone file corresponding to the current time zone (S-44). If the mode of operation has been in Mode II or Mode III, the subroutine similarly updates areas B-II, C-II and D-II in the case of Mode II (S45 - S47) and the subroutine B-III, C-III and D-III in the case of Mode III (S48-S50).

The "tray management" subroutine, which is carried out as Step 39 in the flow chart of Fig. 14, is for ascertaining the current status of the supply of trays against potential needs and is effectively skipped if the operation has been in Mode II (II in S51) wherein no new tray is dispensed. If the mode of operation has been Mode I or Mode III, the numbers in Areas F and G shown in Fig. 13 corresponding to the tray type being used are undated (S52) and the subroutine thereafter compares the difference between the numbers h and g currently in areas H and G with the number i in the area I (S53). The difference (h - g) represents the number of trays of the type being used in inventory and if this is found to be smaller than a certain threshold value i (YES in S53), the CPU 820 causes an appropriate warning message to be displayed on the display device 802 (S54). The warning may typically mention the type of tray and how many trays of that type are still left.

The "cycle counter" subroutine, which is carried out as Step 40 in the flow chart of Fig. 14, is primarily for maintenance reasons and is skipped if the mode of operation has been in Mode II (II in S56) where no packaging operation is performed. If the mode of operation has been Mode I or Mode III, the number n in the cycle counter 823 is updated and checked to determine whether or not n has reached a number (such as $n1 = 10,000$) at which the parts of the apparatus should be lubricated or another number (such as $n2 = 50,000$) at which the cutter blade for the cutter 259 should be replaced with a new one (S57). If n is found to have reached either of these preset numbers (YES in S57), an appropriate warning message is again displayed on the display device 802 (S58).

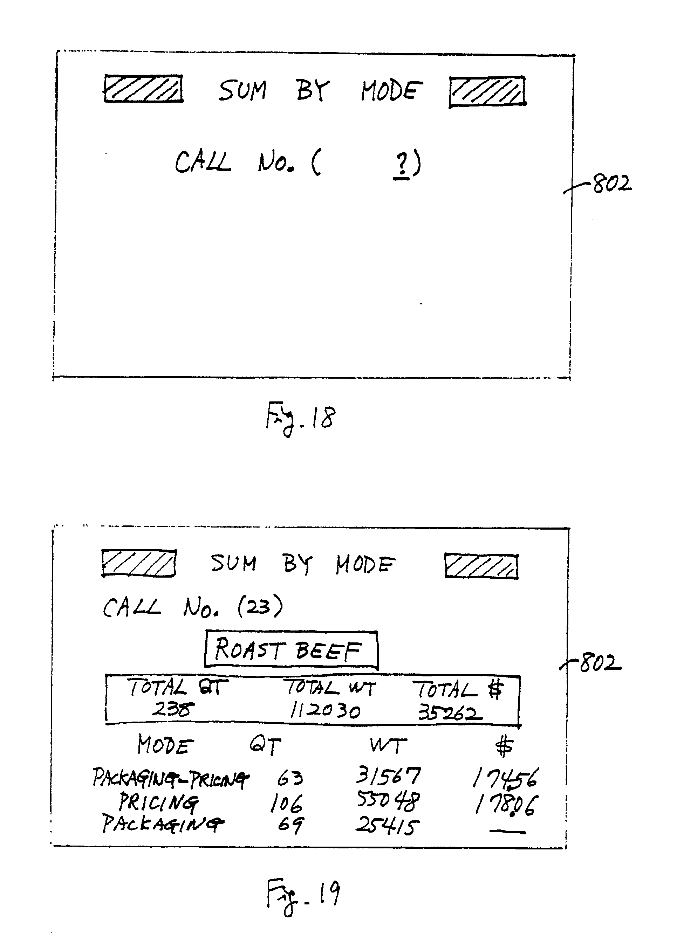

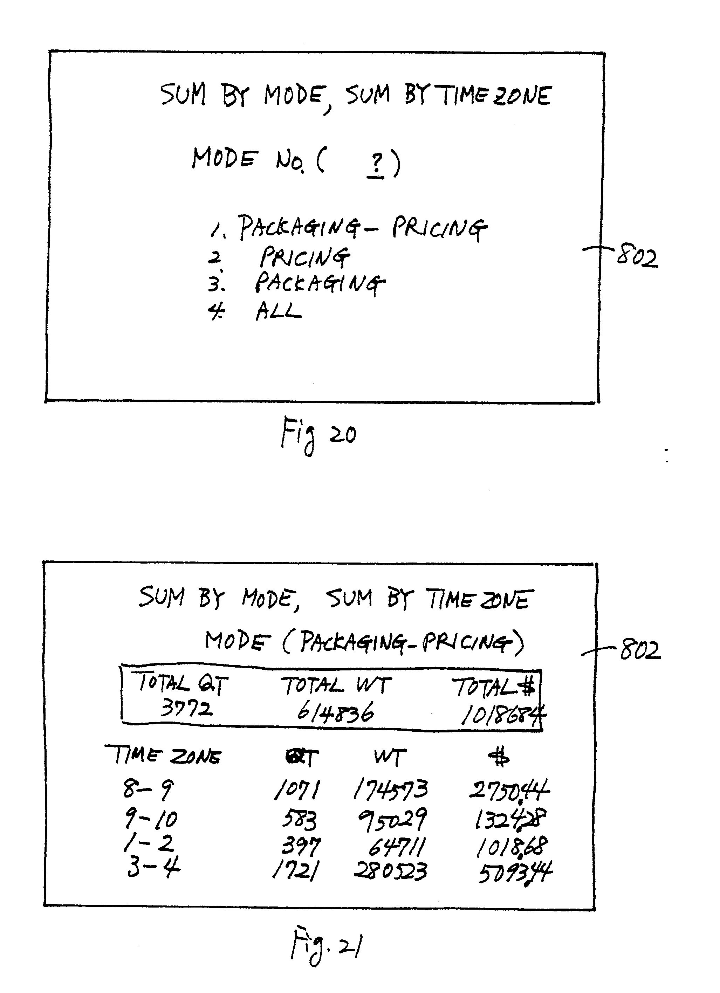

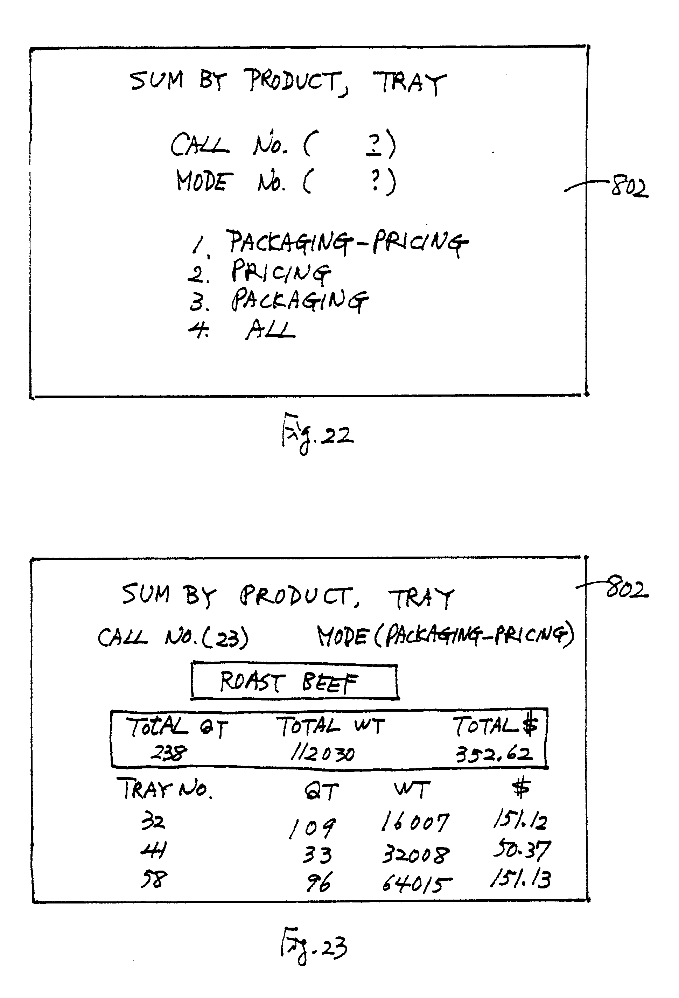

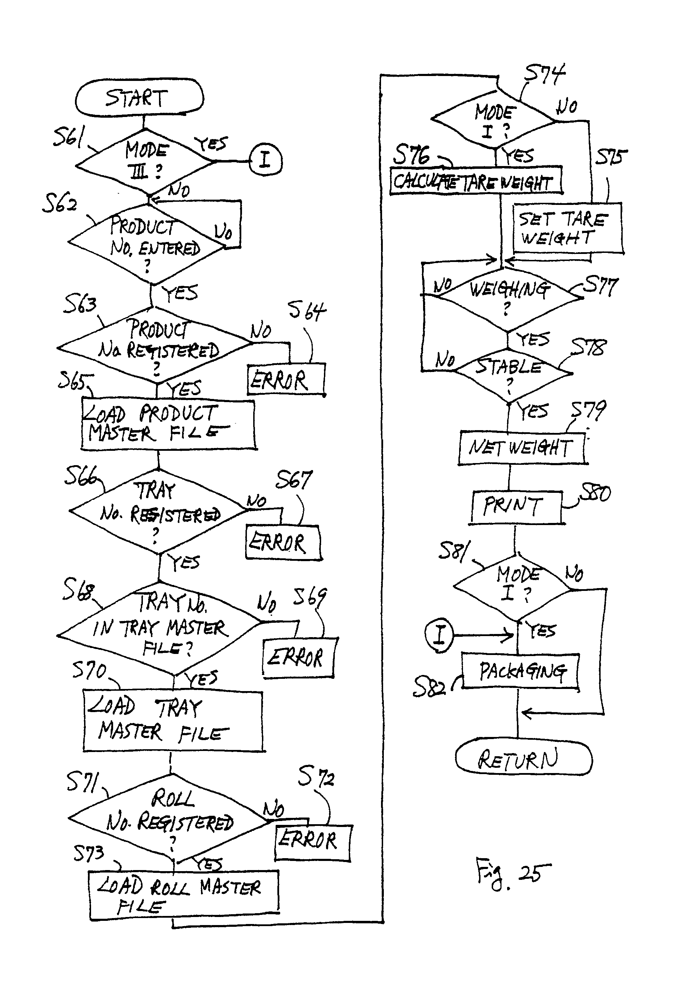

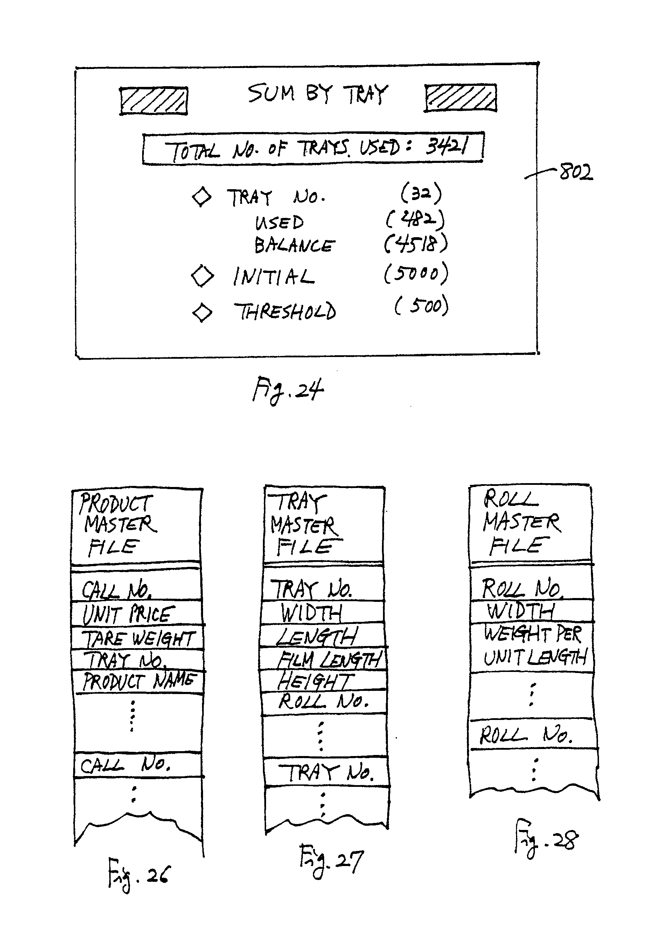

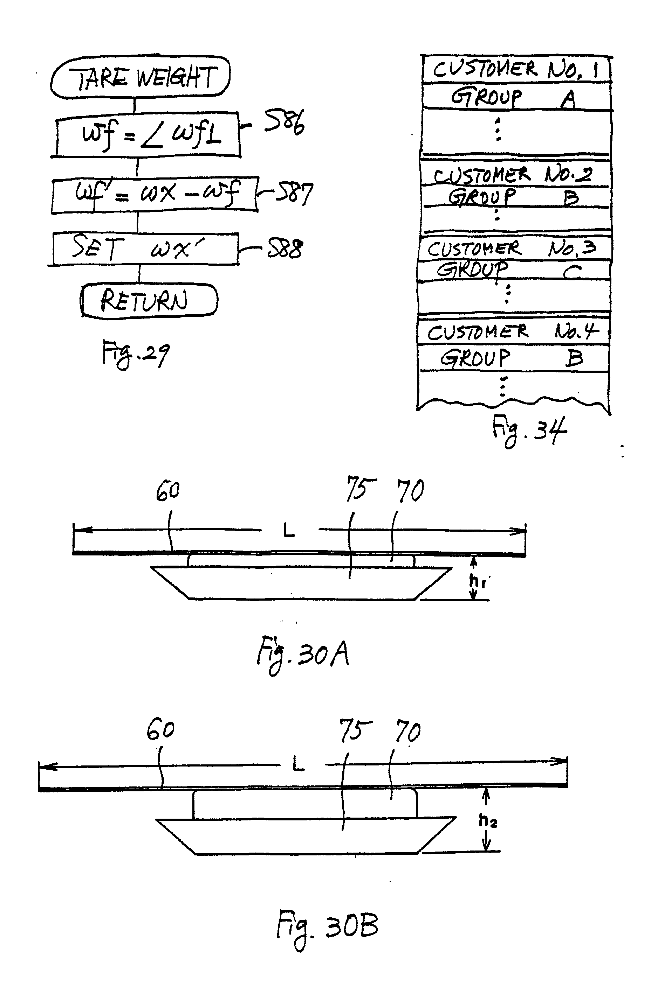

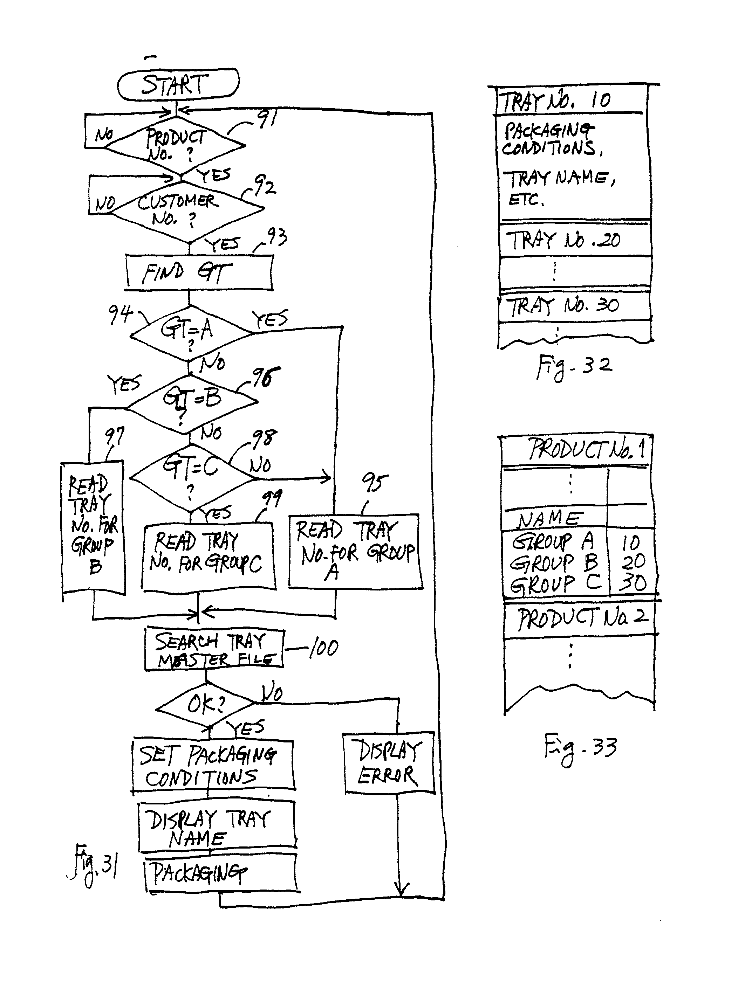

The CPU 820 is further so programmed that the user can operate the keyboard 803 to enter an interrupt when, for example, it is desired to ascertain current data stored in these files in the RAM 822. When an interrupt is entered by the user, the CPU 820 follows a preset routine of a known type to display a graphic menu shown as shown in Fig. 18, for example, to request the user to enter the product code number of the product of interest. If the user is interested in roast beef and its code number is 23, the user key-inputs "23" to cause the display of a screen shown, for example, in Fig. 19, showing not only the product title but also sums by mode and grand totals of the quantity (QT), weight (WT) and price (S) retrieved from the product master file of Fig. 11. If the user is interested in sums by mode and by time zone, the keyboard 801 may be operated in a similar manner to cause a display of a type shown in Fig. 20 and if the user selects Mode I, for example, a display of a type shown in Fig. 21 is made on the display device 802, showing not only the mode which has been selected and the total quantity, weight and price but also these sums corresponding to individual time zones operated in Mode I. If the user is interested in sums by product and tray type, another menu as shown in Fig. 22 is caused to be displayed and if the user chooses the product number of 23 for roast beef, a display of the type shown in Fig. 23 is displayed on the display device 802. If the user is interested in sums according to tray type, a display as shown in Fig. 24 can be displayed in response to the user's input of a tray number "32". In summary, the present invention makes it easier for the user to grasp the current status and performance records of operation.

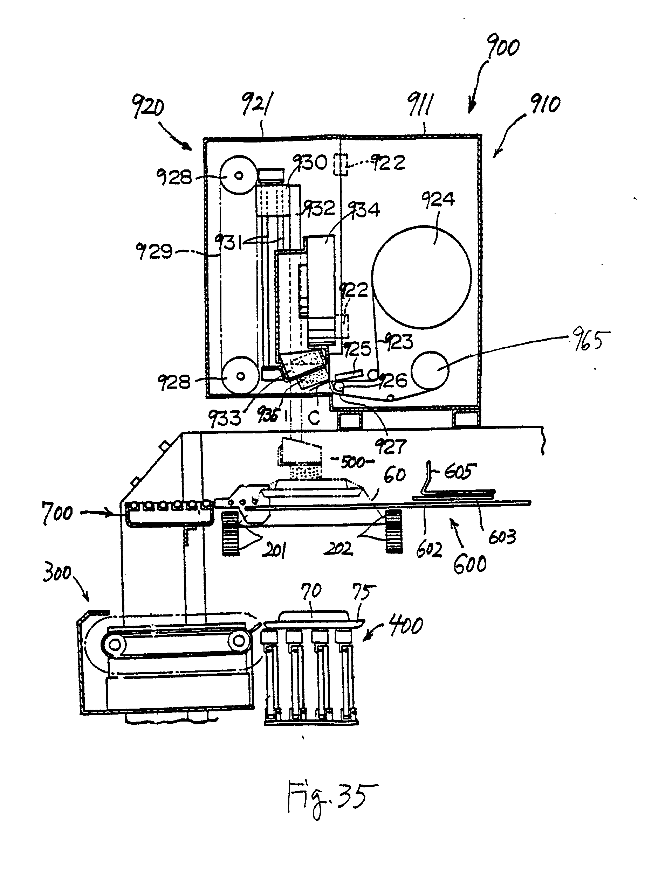

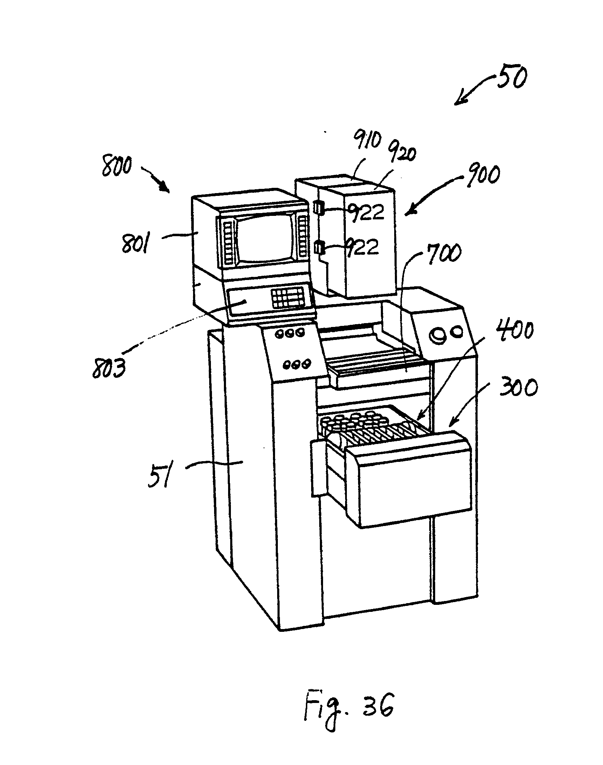

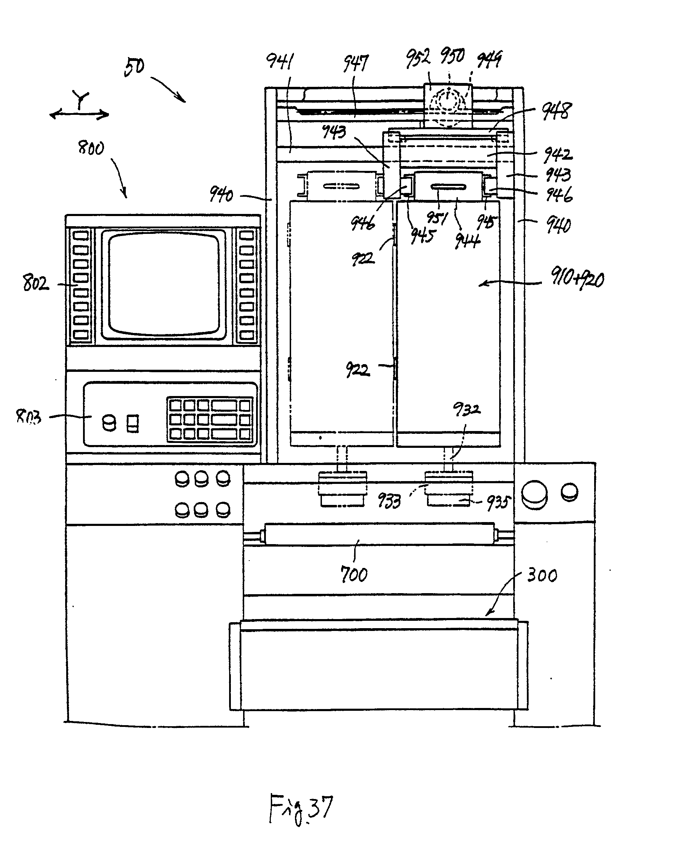

Next, a program according to the present invention for the operation of the CPU 820 by which a correct tare weight can be easily calculated is described by way of the flow chart of Fig. 25. As an initialization process before this program is started, the CPU 820, when the system switch 804 is switched on, creates a product master file, a tray master file and a roll master file. The product master file, as shown in Fig. 26, is for registering for each product code number its unit price, tare weight, the tray code number for the trays to be used, its product name, etc. The tray master file, as shown in Fig. 27, is for registering for each tray type (tray code number) its transverse and longitudinal dimensions, the length L to which the film is to be cut, the height to which an item is to be loaded, the kind of stretch film to be used in connection with the product, etc. The roll master file, as shown in Fig. 28, is for registering for each roll code number its width, the weight per unit length of the film, etc.

After these master files are created and the initialization process is completed, a display of a menu is made on the display device 802 to request the user to enter conditions for operation. Unless the operation is not in Mode III (NO in S61), the CPU 820 waits until a product code number is entered (YES in S62) and then examines whether the code number entered by the user is registered in the product master file of Fig. 26 (S63) and if it is not found therein, an error message to the effect is displayed on the display device 802 (S64). If the inputted product code number is found in the product master file (YES in S63), the data corresponding to that product code number are loaded from the product master file into a certain work area (Area A) of the RAM 822 (S65). Next, the CPU 820 examines whether a tray code number has been entered by the user and, if not, an error message to that effect is displayed on the display device 802 (S67). If a tray code number is found to have been entered by the user (YES in S66), the CPU 820 checks whether this inputted tray code number is registered in the tray master file of Fig. 27 in the RAM 822 (S68) and, if not, another error message to this effect is displayed on the display device 802 (S69). If the inputted tray code number is found among the data in Area A (YES in S68), the data in the tray master file corresponding to this tray code number are loaded into another work area (Area B) of the RAM 822 (S70). Similarly, if there is no roll code number found in the roll master file of Fig. 28 (NO in S71), still another error message is displayed on the display device 802 to this effect (S72). If a roll code number is found (YES in S71), the data corresponding thereto in the roll master file of Fig. 28 are loaded in still another work area (Area C) in the RAM 822. In the next step, the CPU 820 checks the mode of operation by referencing a signal from the mode selection switch 806 (S74) and, if it is Mode I (YES in S74), the subroutine shown in Fig. 29 is carried out to calculate the tare weight of the tray (S76), and this tare weight value is used in the subsequent calculation of the net weight w as will be described below. If it is Mode II, the tare weight value registered in the product master file of Fig. 26 is used (S75) and the net weight w is calculated similarly.

The subroutine for calculating tare weight is described next by referencing the flow chart of Fig. 29. In the first step of this subroutine, the tare weight wf for the film piece is calculated by multiplying the value of L representing the film length stored in the tray master file loaded in Work Area B and the weight of the film per unit area wf1 retrieved from the roll master file loaded in Work Area C (S86). The length L will also depend on the height to which the tray is loaded as schematically illustrated in Figs. 30A and 30B. Next, the tare weight wf for the film piece is subtracted from the tare weight wx representing the sum of the weight of both the tray and the film piece to obtain the tare weight wx' corresponding only to the weight of the tray (S87) and this value is set in the tare register in the RAM 822 (S88).

With reference back to the flow chart of Fig. 25, the CPU 820 now ascertains whether or not a loaded tray is on the weighing machine 301 (S77) and waits until the output weight signal from the weighing machine 301 is stabilized (YES in S78). Thereupon, the total weight W of the product is determined and a net weight w is calculated therefrom by subtracting a correct tare value (S79). In an operation in Mode I, the tare weight is that of the tray while, in an operation in Mode III, the tare weight is the sum of tare weights of both the tray and the film piece. The net weight w thus calculated is printed (S80) and, unless the operation is in Mode II (YES in S81), the packaging operation of the apparatus 50 is carried out.

In summary, this invention makes it possible to eliminate the cumbersome job of pre-registering a great number of tare weights corresponding to a great variety of trays which may be used. Moreover, there is no need for a large memory space for storing all these tare weights. Correct tare weight values can be calculated extremely accurately and the price of a merchandise can be determined more accurately.

In the above example, the invention was described for the situation where the tare weight wx to be preliminarily stored in the product master file includes the tare weight of the film wf. According to another example of the invention, what is stored might be the tare weight only of the tray (exclusive of the weight of film) such that in an operation in Mode I, the tare weight registered in the product master file may be used but that in an operation in Mode II, the tare weight wf is added to that of the tray are added.

According to still another example where films of different widths are used, if the weights per unit length of different films wf1 are preliminarily registered, the tare weight for the film wf can be calculated from the length L of the film. Another program would be to preliminarily register weight per surface area of the film (= wfs) and to multiply this number to the area of the film calculating by multiplying its length L with selected one of preregistered width values. As a further variation of the present invention, the film length L may be calculated by a predefined formula $L = \alpha T + \Delta T$ as mentioned above. In summary, the improvements described above according to the invention make it possible to automatically calculate a correct tare weight. This frees the user from the cumbersome job of preliminarily registering a large number of tare weights and eliminates the necessity of reserving a large memory space for such a purpose.

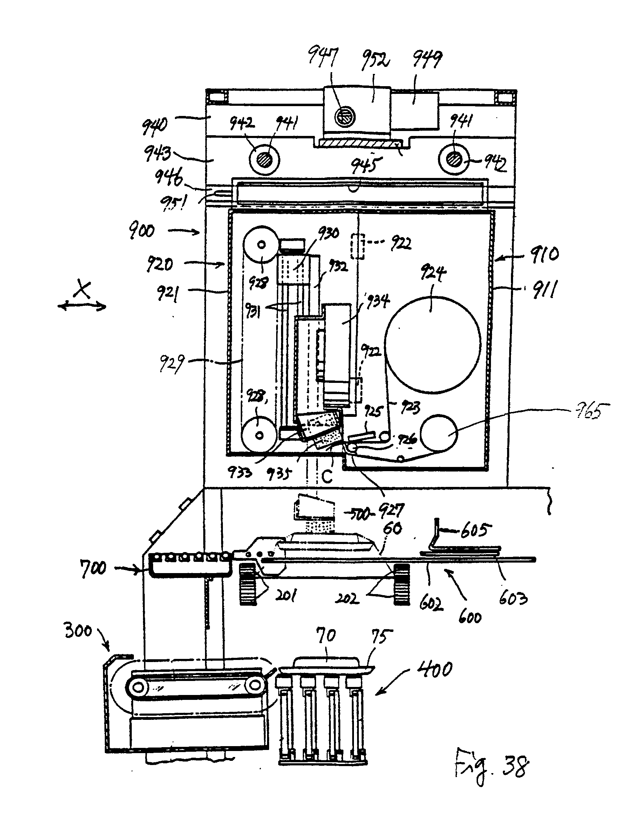

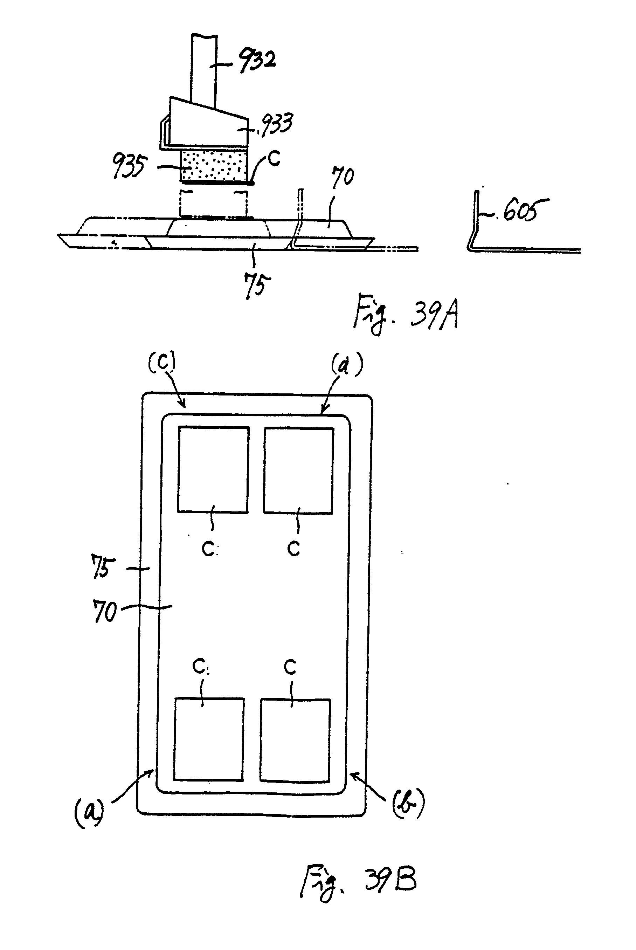

Next, the flow chart of Fig. 31 is referenced to describe a program according to the invention which is particularly suited where different customers use trays of different kinds. For the purpose of description, the program will be described below for a situation where there are only three groups of customers (Groups A, B and C). Before this program is started, a tray master file as shown in Fig. 32, a product master file as shown in Fig. 33 and a customer master file as shown in Fig. 34 are created in the RAM 822. The tray master file is for registering tray code numbers for trays of different types and packaging conditions for these types. The product master file is for registering for each product code number a product name corresponding to this code number as well as the types of trays which may be used for this product. Fig. 33 shows, for example, a situation where customers in Group A use trays with code number 10 for a certain product, and those in Groups B and C respectively use trays with code number 20 and code number 30. The customer master file is for registering for each customer the group to which the customer belongs.

After the user selects a mode of operation (say, Mode I) and the master files of Figs. 32 - 34 are created, the CPU 820 waits until the user enters a product code number (S91) and a customer code number (S92). The CPU 820 thereupon determines the group (say, GT) to which this customer belongs (S93). If the inputted customer code number is 1, for example, a code number representing Group A is read out. If GT is Group A (YES in S94), the product master file is searched and the tray code number to be used for the specified product by customers in Group A is retrieved (S95) and set in a work area of the RAM 822. If the specified product code number is 1, Fig. 33 shows that tray code number 10 is selected. If GT is Group B or C (YES in S96 or S98, respectively), the tray code for the specified product for customers of Group B or C, respectively, is retrieved (S97 or S99) and similarly set in the RAM 822. If GT is none of the three groups mentioned above, Step S95 is performed. Next, the tray master file of Fig. 32 is searched to check if the tray code number thus retrieved is included (S100). If this tray code number is found (YES in S101), the packaging conditions corresponding to this tray code number are set in the RAM 522 (S102) and the tray name corresponding to this number is displayed on the display device 802 (S103). The CPU 820 then waits for the start switch 805 to be operated and when the start switch 805 is operated, the usual packaging-pricing process is carried out (S104). If the search results in the discovery that the tray code number is not found in the tray master file (NO in S101), an error message to this effect is displayed on the display device 802 (S105).

With a program of this type, the user has only to specify a product code number and a customer code number in order to automatically set packaging conditions. In other words, there is no need to input any tray code number even if trays of different types are used for the same product by different customers. It now goes without saying that the number of groups of customers (three in this example) is not intended to limit the scope of the present invention. Since different customers who use trays of the same type are placed in the same group, furthermore, the memory space for storing these master files need not be large.

The label printer assembly 900 has been illustrated only schematically and described only from its functional point of view above. Its structure will be described next in detail by way of several examples embodying the present invention.

According to one embodiment of the invention shown in Fig. 35, the label printer assembly 900 is composed of a label printer 910 (with its casing indicated by numeral 911) and a label attaching device 920 (with its casing indicated by numeral 921) which are unistructurally assembled together. The casing 921 of the label attaching device 920 is in front of the casing 911 of the label printer 910 and is supported thereby by means of a pair of hinges 922 so as to be able to open or close freely. If the casing 921 of the label attaching device 920 is opened, the interior of the label printer 910 and the label attaching device 920 becomes exposed. This is convenient for performing various maintenance and inspection jobs.

Inside the label printer 910 is a label roll 924 comprised of a belt-like elongated sheet (label sheet) 923 on which a large number of labels (indicated by letter C) are removably (by peeling) attached at a fixed pitch in the longitudinal direction of the sheet 923. The sheet 923, which is pulled out of the roll 924, is then passed between a printer head 925 and a platen roller 926. Data such as the price and weight of the product which has been processed are then printed on a label C on the sheet 923 and the printed label C is removed from the sheet 923 by a label removing device 927 disposed in a forward direction. Numeral 965 indicates a take-up roller.

The label attaching device 920 includes a pair of pulleys 928 (driving means for which are not shown), a timing belt 929 stretched vertically therebetween, an arm 932 which is connected to this timing belt 929 through a base 930 and moves vertically upwards and downwards along guides 931, a suction head 933 which swings from the bottom end of this arm 932, and a blower 934. The blower 934 is disposed so as to cause the printed label C to become sucked by the suction head 933. A buffer member 935 is provided below the suction head 933 such that the negative pressure generated by the blower 934 is applied to the buffer member 935. When the suction head 933, together with the buffer member 935 attached thereto, is at its raised position shown by solid lines, both the suction head 933 and the buffer member 935 are tilted and the printed label C is sucked to the bottom surface of the buffer member 935. When the pulleys 928 are operated and the timing belt 929 is moved in a specified direction, the arm 932 causes the suction head 933 and the buffer member 935 (with the label C sucked thereonto) to move downward as shown by broken lines such that the printed label C is attached to the upper surface of the target package below at the packaging station 500. The suction head 933 is attached to the bottom end of the arm 932 so as also to be rotatable horizontally.

The label attaching device 920 is also controlled by the control device 800 such that the downward motion of the suction head 933 is synchronized with the forward motion of the discharge pusher 605. To briefly summarize the operation of the label attaching device 920 described above, a weighed product 70 on a tray 75 is lifted by the lifter 400 to the packaging station 500 to assume the position therein as indicated by dotted lines. As explained above, when the weighed product pushes the stretched film piece 60 from below and its edge parts are folded downward by the side and back folding plates 602 and 603, the weighed and lifted product is precisely positioned at the packaging station 500. In other words, the folding device 600 of the present invention serves not only to fold the edge parts of the film piece downwards but also as a positioning means for keeping the target product at a prespecified position. Thus, the label attaching device 920 of the present invention has only to be placed on top of the packaging station 500 and there is no need for any dedicated package positioning means.

Moreover, since the downward motion of the arm 932 is effected in coordination with the folding process by the folding device 600, there is no need for any equivalent of the prior art object sensor for detecting the presence or absence of an object to be labeled. This also contributes to the reduction in size of the apparatus 50 as a whole. It is further to be noted that the suction head 933 is horizontally rotatable. This makes it possible to attach a printed label C on a packaged product in any direction.

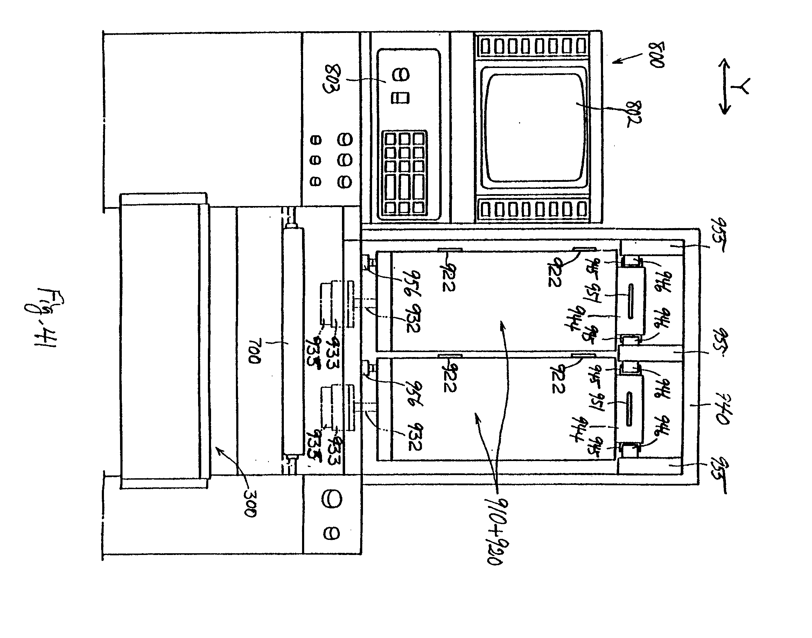

Figs. 37 and 38 show a weighing-packaging-pricing apparatus with another label printer assembly 900 embodying the present invention. This label printer assembly is mostly like the one described above by way of Fig. 35. Components which are equivalent to or at least similar to those shown in Fig. 35 are indicated by the same numerals and are not separately explained.

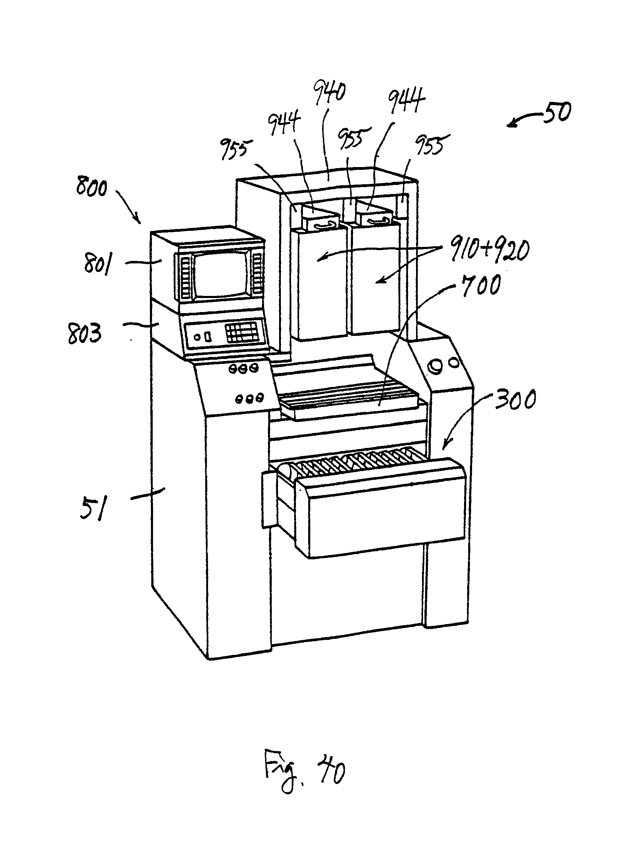

Broadly speaking, the apparatus shown in Figs. 37 and 38 is different from the one described immediately above with reference to Figs. 35 and 36 in that the label-printing and label-attaching mechanisms inside the casings 911 and 921 can be moved both in the forward-backward direction of the apparatus 50 indicated by the arrow X in Fig. 38 and in the transverse direction indicated by the arrow Y in Fig. 37. For this purpose, a pair of left-hand and right-hand side frames 940 are affixed to the top surfaces of the casings 911 and 921 and a pair of front and back guide rods 941 are affixed to the frames 940. A pair of supporting brackets 943, separated from each other at a fixed distance by means of a spacer 942, is supported by each of the guide rods 941 slidably therealong in the direction of the arrow Y. A base 944 is further affixed to the top surface of the casings 911 and 921 and guides 945 are affixed to both side surfaces of the base 944 so as to mutually slidingly engage with rails 946 affixed to the supporting brackets 943.

A rack shaft 947 extending in the direction of the arrow Y is further affixed between the frames 940. A base 948 is attached to the top surfaces of the supporting brackets 943 and supports thereon a casing 952 containing a motor 949 and a pinion gear 950 engaging with the rack shaft 947. In this manner, not only is it possible to pull the entire label-printing and label-attaching mechanism inside the casings 911 and 912 forward in the direction of the arrow of X by pulling it by a handle 951 attached to the front surface of the base 944 but the motor 949 can be operated to move the entire mechanism transversely in the direction of the arrow Y along the rack shaft 947 as shown in solid and broken lines in Fig. 37.

The operation of the label-printing and label-attaching mechanism inclusive of the motor 949 is also controlled by the control device 800 as broadly shown in Fig. 6 by way of a box indicated by numeral 900. Since a loaded tray 75 is accurately positioned when it is lifted to the packaging station 500, the position (in the direction of arrow X on the packaged target product about to be discharged) at which it is desired to have a printed label attached, can be controlled easily by adjusting the timing of operation of the pusher 605. Since the position of the label-attaching mechanism can be moved on the transverse direction along the arrow Y, furthermore, the label position in the direction of Y can also be adjusted. If the buffer member 935 with a printed label C thereon is lowered before the discharge of the loaded packaged loaded tray (70 and 75) by the pusher 605 is started as shown in Fig. 39A, the label C is attached at a forward corner of the package indicated by (a) in Fig. 39B. If the discharge by the pusher 605 is started earlier such that the loaded tray is at a forwardly removed position shown by broken lines in Fig. 39A when the arm 932 lowers the label suction head 933 and the buffer member 935 together with a printed label C, the label C is attached at a backward corner of the package indicated by (b) in Fig. 39B. If the entire label attaching mechanism is preliminarily moved in the direction of the arrow Y before the buffer member 935 is lowered, the label C may be attached on the other side of the target product at positions indicated by (c) or (d), depending upon when the operation of the pusher 605 is started with respect to the lowering of the buffer member 935 by the arm 932. In summary, an apparatus 50 with a label printing assembly 900 as disclosed above is capable of placing printed labels at any position on the top surface of a target package.

Alternatively, the control program can be so designed that the operation of the motor 949 be controlled according to the size of the tray 75 inputted from the keyboard 803 such that the position of the label C on the target package can be automatically adjusted according to the size of the tray 75 to be used. The labeling position can also be adjusted in part by changing the position of the labeling mechanism in the direction of the arrow X. If the labeling mechanism is pulled forward all the way in the direction of the arrow X and the casing 921 is opened, furthermore, the interior of the device 900 becomes very accessible for the ease of maintenance and inspection works.

Figs. 40, 41 and 42 show a weighing-packaging-pricing apparatus with still another label printer assembly 900 embodying the present invention. This label printer assembly resembles the one described above by way of Figs. 37 and 38. Components which are equivalent to or at least similar to those shown in Figs. 37 and 38 are indicated by the same numerals and are not separately explained.

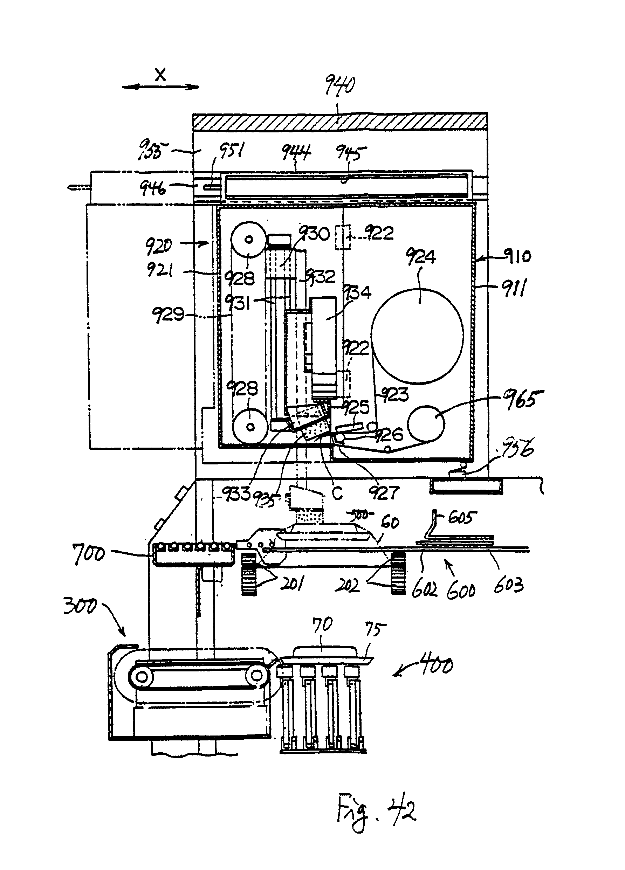

Broadly speaking, the label printer assembly 900 shown in Figs. 41 and 42 is different from the one described above with reference to Figs. 37 and 38 in that there are disposed inside the frame 940 two label-printing and label-attaching mechanisms (= label-handling mechanism) 910+920 next to each other which are adapted to handle different kinds of labels. For example, one of them may be for labels of the type described above showing the price, weight, etc. in a conventional manner, the other being for labels having a bar code printed thereon. The top part of this frame 940 supports a plurality of brackets 955 extending in the forward-backward direction (along the arrow X). Each label handling mechanism 910+920 is structured as explained above with reference to Figs. 37 and 38 and is movable in the forward-backward direction shown by the arrow X, having a base 944 attached thereto and the horizontal rails 946 supported by the brackets 955 engaging with guides 945 affixed to the base 944, as explained above.

As shown in Figs. 41 and 42, furthermore, position sensors 956 are provided for detecting the positions of the label-handling mechanism 910+920. Detection signals outputted from these position sensors 956 are received by the CPU 820 as schematically shown in Fig. 6 by way of the box indicated by numeral 900. Thus, the control program for the CPU 820 may be so designed that the CPU 820 is switched to an automatic labeling mode of operation if the position sensors 956 detect that the label-handling mechanisms 910+920 are at label attaching positions directly above the packaging station 500 such that both the label-printing and label-attaching operations are carried out automatically and to a manual labeling mode of operation if the position sensors 956 detect that the label-handling mechanisms 910+920 are pulled forward to a pulled-out position above the sealing device 700 as shown by broken lines in Fig. 42 such that the label-handling mechanisms 910+920 print labels but the user is expected to manually attach them to the packages.

One of the advantages of the apparatus 50 described above and illustrated in Figs. 40-42 is, therefore, that two different kinds of labels can be attached to each target package with a single apparatus. Another advantage is that the mode of operation of the apparatus can be automatically switched between automatic operation and manual operation simply by pulling the label-handling mechanisms into or out of the label-attaching position. These advantages are in addition to the advantages mentioned above regarding the apparatus described above.

Next, the label removing device 927 shown only schematically in Figs. 35, 38 and 42 will be explained more in detail with reference to still another label printer assembly 900 embodying the present invention characterized, as shown in Fig. 43, as having not only the hinges 922 by which the casings 911 and 921 can be opened and closed but also a detector 960 of any known kind for detecting whether the casings 911 and 921 are opened or closed with respect to each other. The casing 911 and 921 are provided with a locking device 961 for keeping the casing 911 and 921 in the closed condition.

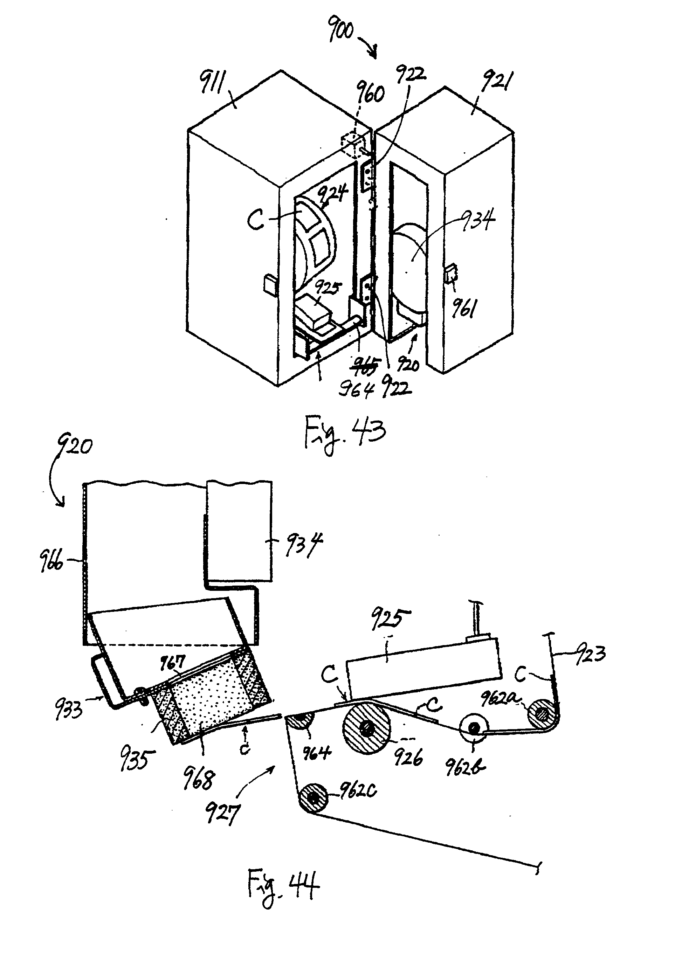

With reference next to Fig. 44 which shows a portion of Figs. 35, 38 and 42 near the printer head 925 more in detail, the belt-like elongated sheet (label sheet) 923 on which a large number of labels C are pasted at a constant pitch is directed towards the label attaching device 920 by means of guide rollers 962a and 962b and is passed between the platen roller 926 and the printer head 925. Near the platen roller 926 and on its side towards the label attaching device 920, there is provided a label peeling rod 964. The sheet 923, after passing over this label peeling rod 964 to have the labels C removed from the surface thereof, is directed in a downward direction by another guide roller 962c and is then wound up by the take-up roller 965. The sheet 923 is pulled by a constant distance $L_{11}$ (to be explained below) for each labeling operation by means of a motor (not shown) connected to the take-up roller 965. In Fig. 44, numeral 966 indicates an air suction box providing an air passage connecting the buffer member 935 with the blower 934, numeral 967 indicates a slit connecting the buffer member 935 to this air passage and numeral 968 generally indicates the air suction pores of the buffer member.

With reference also to Figs. 35, 38 and 42, as the label suction head 933 is raised to the label receiving position (indicated by solid lines in these figures), it becomes tilted as described above with the lower surface of the buffer member 935 facing somewhat towards the label printer 910. When a printed label C is separated from the sheet 923, its glued surface is facing downwards as it moves slidingly along the bottom surface of the buffer member 935 as shown in Fig. 44. At this point, the bottom of the air suction box 966 is closed by the label suction head 933 while the air is sucked out of its interior by means of the blower 934 such that the interior of the air suction box 966 is in a negative pressure condition. This negative pressure operates on the bottom surface of the buffer member 935 through the slit 967 and the air suction pores 968 of the buffer member 935 to pull the printed label C away from the sheet 923. Thereafter, as explained above, the timing belt 929 is operated such that the base 930 slides down along the guides 931 and the printed label C is pressed down on the top surface of the packaged article waiting below. At this instance, the bottom of the air suction box 966 is opened to reduce the negative pressure therein. Thus, the pressure by the label suction head 933 is weakened and the printed label C is easily released from the buffer member 935.

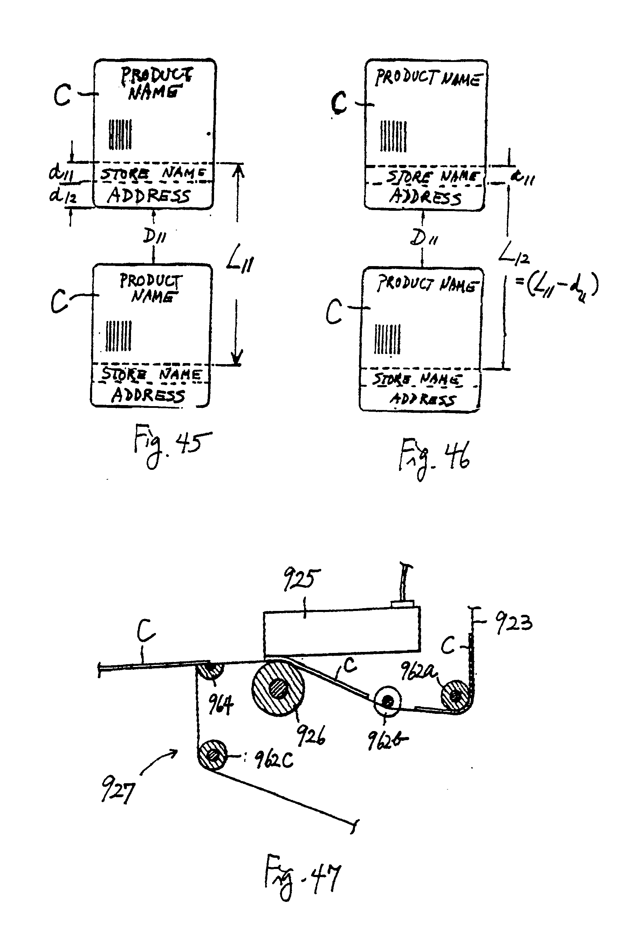

Next, the operation of the printer head with respect to the motion of the sheet 923 is explained with reference additionally to Fig. 45. As explained above, as soon as the weight of the article to be packaged is determined by the weighing device 300, its price is calculated by the CPU 820 and the printer head 925 serves to print this calculated price. In actually performing this function, however, the label printer 910 initially prints the store name and the store address as shown in Fig. 45 on the next label C to be issued on the basis of the information associated with the previous packaging operation. Such a partially printed label is caused to wait between the platen roller 926 and the printer head 925 as shown in Fig. 44 and as soon as the calculation of the price by the CPU 820 is completed, such price is additionally printed on the label C and the sheet 923 is advanced by the aforementioned distance $L_{11}$ as shown in Fig. 45. As the sheet 923 passes over the label peeling rod 964 and suddenly changes its direction of motion, the label C is automatically peeled off the sheet 923 and sent towards the bottom surface of the label suction head 933 as explained above.

The aforementioned distance $L_{11}$ by which the sheet 923 is advanced must be such that the label C originally at the illustrated position between the platen roller 926 and the printer head 925 after only the store name and the store address have been printed will move thereby to a final position at which the label C is completely separated from the sheet 923. Thus, this final position must be such that the back edge of the label C is already separated from the label peeling rod 964. This is necessary in order to prevent the label C from staying on the sheet 923 as the label suction head 933 begins to move downward. In Fig. 45 (and thereafter), $D_{11}$ indicates the separation between mutually adjacent labels C pasted on the sheet 923, $d_{11}$ indicates the width of the zone for printing the store name and $d_{12}$ indicates that of the zone for printing the store address.

The label printing assembly 900 of Fig. 43 is also characterized as being operable both in an automatic mode and in a manual mode. In the manual mode of operation, the operation of the label attaching device 920 alone is disabled such that the assembly 900 essentially serves only as the label printer 910. The selection of the manual mode of operation is carried out by putting the label attaching device 920 in a retracted position with respect to the label printer 910. Explained more in detail, the label printer 910 and the label attaching device 920 are connected together by the hinges 922 when the assembly 900 is being operated in the automatic mode of operation such that the label C issued from the label printer is automatically received by the label attaching device 920. In other words, the issued label C cannot be taken up by the user's hand to be manually attached to the packaged product. When a manual mode of operation is desired, therefore, the label attaching device 920 is retracted by means of the hinges 922 as shown in Fig. 43. The retracted condition of the label attaching device 920 is detected by the detector 960 which causes, as symbolically shown in Fig. 6, the control device 800 not only to disable the automatic operation of the label attaching device 920 but also to change the distance by which the label-carrying sheet 923 is advanced.

As long as the label printer assembly 900 is operated continually either in the automatic mode or in the manual mode, the label-carrying sheet 923 is advanced by the same distance given above by $L_{11}$ after each cycle of operation. When the mode of operation is changed from automatic to manual, however, this distance is changed to $L_{12}$ ( = $L_{11}$ -$d_{11}$) as shown in Fig. 46, but only for the first cycle of operation after the mode change.

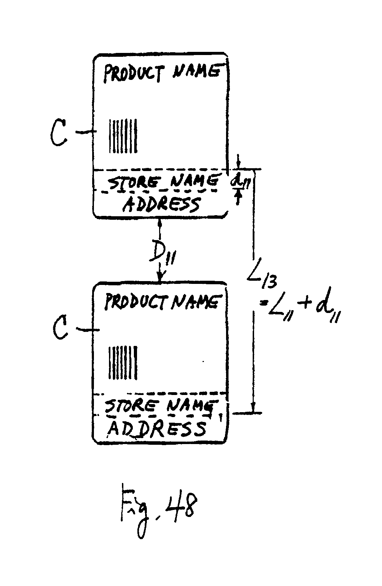

The reason for this change in distance of travel is explained next. When the mode of operation is changed from automatic to manual, there is already one of the labels C with the store name and store address printed thereon and sandwiched between the platen roller 926 and the printer head 925 as explained above and illustrated in Fig. 44. Now that the mode of operation has been changed, the distance of travel is reduced from $L_{11}$ to $L_{12}$ and this reduction in the travel distance causes the label C to stop before it is completely separated from the sheet 923. Instead, the label C is stopped with its back edge still attached to the sheet 923 as shown in Fig. 47. This has the effect of preventing the label C from dropping off the sheet 923 even though there no longer is the label suction head 933 to receive it in this manual mode of operation. The user in this situation removes the label C from its partially attached condition and attaches it to the packaged product by hand.

It is to be appreciated in this connection that the next label C on the sheet 923 between the printer head 923 and the platen roller 926 is accordingly further behind (by distance $d_{11}$) as compared to the situation depicted in Fig. 44. In other words, in the situation of Fig. 47, only the store address is printed on the next label C while the control device 800 receives the next weight information from the weighing device 300.

From the second label on, the distance by which the label-carrying sheet 923 is advanced after each operation returns to the normal distance $L_{11}$ shown in Fig. 45 such that every subsequently advanced printed label will stop as shown in Fig. 47 with its backward edge remaining attached to the sheet 923.

When the mode of operation is changed from manual to automatic, the reverse process is caused to take place automatically by the control device 800 because, otherwise, the printed label would remain stuck to the sheet 923 along its back edge as shown in Fig. 47 and may not be easily removable by the label suction head 933 of the label attaching device 920. In other words, when the control device 800 receives a signal from the detector 960 indicating that the label attaching device 920 is no longer in the retracted condition and hence that the automatic mode of operation is going to be started, not only is the operation of the label attaching device 920 enabled again but also the control device 800 causes the distance of travel of the first label to be changed from $L_{11}$ to $L_{13}$ (= $L_{11}$ + $d_{11}$) as shown in Fig. 48. Thus, the next label which is waiting to be printed between the printer head 925 and the platen roller 926 at the position depicted in Fig. 47 will advance, after the price of the article is printed thereon, far enough to be completely separated from the sheet 923 as shown in Fig. 44 with its back edge passing the position of the label peeling rod 964. In this manner, the label C is ready to be picked up by the label suction head 933 of the label attaching device 920 for its automatic label attaching operation.

From the second label on, the distance by which the label-carrying sheet 923 is advanced after each operation is again returned to the normal distance $L_{11}$ shown in Fig. 45 such that every subsequently advanced printed label will advance to the position as shown in Fig. 44 with its backward edge separated from the sheet 923.

To summarize, a label printing assembly as described above by way of Figs. 43 ~ 48 is advantageous not only because the label attaching operation can be selectably performed by hand, for example, when the products to be labeled are fragile and must be handled carefully, or when the trays come in different shapes and sizes, or when the labels must be attached in different orientations, but also because the manner of issuing the printed labels can be automatically changed between the automatic and manual modes of operating the label attaching device.

If a label printer assembly of the type described above allowing both automatic and manual modes of operating a label attaching device is combined with a weighing-packaging-pricing apparatus of the types operable selectably as described above in the aforementioned weighing-packaging-pricing mode (Mode I), weighing-pricing mode (Mode II) and packaging mode (Mode III), the combination can be operated in a larger number of different modes as shown in Table 1 wherein Modes I-A and II-A indicate Modes I and II combined with the automatic mode of operating the label attaching device and Modes I-M and II-M indicate Modes I and II combined with the manual mode of operating the label attaching device.

EP 0 456 999 A2

| Table 1 | | | | | | |
|---|---|---|---|---|---|---|
| Mode | Weigh | Package | Auto | Manual | Attach | Printer |
| I-A | X | X | X | | ON | ON |
| I-M | X | X | | X | OFF | ON |
| II-A | X | | X | | ON | ON |
| II-M | X | | | X | OFF | ON |
| III | | X | | | | |

(Notes)
    Weigh:    Weighing device 300
    Package:  Packaging (folding) device 600
    Attach:   Label attaching device 920
    Printer:  Label printer 910

The foregoing description of preferred embodiments of the invention has been presented for purposes of illustration and description. It is not intended to be exhaustive or to limit the invention to the precise form disclosed, and obviously many modifications and variations are possible in light of the above teaching. For example, the label-attaching mechanism composed of a suction head as shown above may be replaced by another type which causes labels to fly by air pressure. The embodiments were chosen and described in order to best explain the principles of the invention and its practical application to thereby enable others skilled in the art to best utilize the invention in various embodiments and with various modifications as are suited to the particular use contemplated. It is intended that those modifications and variations which may be apparent to a person skilled in the art are included within the scope of the invention.

## Claims

1. An apparatus characterized by a packaging device which supports a stretched film (60) at a packaging station (500), lifts an object against said stretched film (60) and folds edge parts of said film to surround said object (70) and to thereby form a packaged product, and a labeling device (920) which is disposed at a labeling position directly above said packaging station (500) and is adapted to attach a label on said packaged product at said packaging station, the folding operation by said packaging device being coordinated with the label-attaching operation by said labeling device (920).

2. The apparatus of claim 1 wherein said labeling device is movable horizontally away from said labeling position.

3. The apparatus of claim 1 further characterized by a pusher (605) which pushes (605) said packaged product (70, 75) at said packaging station (500) in a specified discharge direction to thereby discharge said packaged product, means (949; 947) for moving said labeling device at said labeling position in a perpendicular direction to said discharge direction, and a control device (800) for controlling operations of said apparatus such that said labeling operation by said labeling device (920) is carried out in synchronism with the discharge operation by said pusher (605) at a specified timing.

4. The apparatus of claim 1 further characterized by a weighing device (300) which weighs said object (70), and a supporting device (941-946) which supports said labeling device (920) movably between said labeling position and a retracted position away from said labeling position, said labeling device (920) issuing said label in response to a signal received from said weighing device (300).

18

5. The apparatus of claim 1 further characterized by a weighing device (300) which weighs said object, two labeling devices (910, 920) which are disposed next to each other and attach differently printed labels on said packaged product at said packaging station (500) in response to a signal received from said weighing device (300), and a supporting device (941; 946) which supports said labeling device (910, 920) movably between said labeling position and a retracted position away from said labeling position.

6. The apparatus of claim 4 wherein said labeling device (920) is operable selectably either in an automatic mode wherein said labeling device issues and attaches said label automatically and a manual mode wherein said labeling device (920) issues but does not attach said label automatically, said apparatus further comprising a supporting device (941-946) which supports said labeling device (920) movably between said labeling position and a retracted position away from said labeling position, a position detector (960) for detecting whether said labeling device is at said labeling position or at said retracted position, and a mode-switching device (806) which automatically operates said labeling device (920) in said automatic mode if said position detector (960) detects said labeling device at said labeling position and in said manual mode if said position detector (960) detects said labeling device at said retracted position.

7. The apparatus of claim 1 further characterized by a weighing device (300), first memory means (828) for storing tare weight of trays to be used for carrying objects to be weighed by said weighing device, second memory means (828) for storing the weight per unit area or length of a film (60) used for wrapping said trays (75) carrying said objects (70) thereon, film-weight calculating means for calculating tare weight of said film (60) from the weight stored in said second memory means and a specified length of said film, and net-weight calculating means for calculating net weights of said objects from said calculated tare weight of said film and said tare weight of said trays retrieved from said first memory means, said labeling device (920) being further adapted to print said net weights on labels.

8. The apparatus of claim 1 further characterized by first memory means (828) for storing packaging conditions for each tray type; second memory means (828) for storing a plurality of tray types for each item, third memory means (828) for storing tray types for each customer, first specifying means for specifying an item type, second specifying means for specifying a customer group, and a control device (800) for retrieving, from said third memory means, tray types used by a specified customer group, selecting from said second memory means a tray type used for an item type specified through said first specifying means by a customer group specified through said second specifying means on the basis of said retrieved tray types and said specified item type, retrieving, from said first memory means, packaging conditions corresponding to said selected tray type, and operating said packaging device (500) according to said retrieved packaging conditions.

9. The apparatus of claim 1 further characterized by selecting means for selecting a tray type to be used for said packaging device (500), and data-collecting means for collecting updated data on the number of used trays for each of tray types which have been selected by said selecting means on the basis of the frequency of operation of said packaging device (500).

10. The apparatus of claim 1 wherein said labeling device includes a label printer (900) which prints on a label in coordination with supply of said packaged product and outputs said printed label, a label-attaching device (920) which can be moved between a first position adjacent said label printer (900) and a second position removed from said label printer (900), said label-attaching device (920) receiving said printed label outputted by said label printer and attaching said received printed label on said packaged product when said label-attaching device (920) is at said first position, a detector (960) for detecting whether said label-attaching device is at said first or second position, and control means (800) for automatically causing said label printer to be operable and said label-attaching device to be disabled when said detector (960) detects said label-attaching device (920) to be in said second position.

11. The label-issuing apparatus of claim 10 wherein said control means (800) also controls such that each of said labels travels a normal distance from said label printer (900) to said label-attaching device (920) if said label-attaching device (920) remains in said first position or in said second position, that the first of said labels to travel from said label printer (900) to said label-attaching device (920) after said detector (960) detects that said label-attaching device has moved from said first position to said second position is caused to travel a shorter distance that said normal distance such that a part of said first of said labels remains on said label printer (900), and that the first of said labels to travel from said label printer (900) to said label-attaching device (920) after said detector (960) detects that said label-attaching device (920) has moved from said second position to said first position is caused to travel a longer distance than said normal distance such that no part of said first of said labels remains on said label printer (900).

12. An apparatus characterized by a weighing device (300), first memory means (828) for storing tare weight of trays to be used for carrying objects to be weighed by said weighing device (300), second memory means (828) for storing the weight per unit area or length of a film used for wrapping said trays carrying said objects thereon, film-weight calculating means (821) for calculating tare weight of said film from the weight stored in said second memory means and a specified length of said film, net-weight calculating means for calculating net weights of said objects from said calculated tare weight of said film and said tare weight of said trays retrieved from said first memory means, and label-issuing means (924) for printing said net weights on labels and issuing said labels.

13. An apparatus characterized by a packaging device (500) for producing a packaged product by enclosing in a stretched film piece (60) an object (70) carried on a tray (75), first memory means (828) for storing packaging conditions for each tray type, second memory means (828) for storing a plurality of tray types for each item, third memory means (828) for storing tray types for each customer, first specifying means for specifying an item type, second specifying means for specifying a customer group, and a control device (800) for retrieving, from said third memory means, tray types used by a specified customer group, selecting from said second memory means a tray type used for an item type specified through said first specifying means by a customer group specified through said second specifying means on the basis of said retrieved tray types and said specified item type, retrieving, from said first memory means, packaging conditions corresponding to said selected tray type, and operating said packaging device (500) according to said retrieved packaging conditions.

14. An apparatus characterized by a packaging device (500) for producing a packaged product by enclosing a loaded tray (75) in a streched film piece (60), selecting means for selecting a tray type to be used for said packaging device (500), and data-collecting means for collecting updated data on the number of used trays for each of tray types which have been selected by said selecting means on the basis of the frequency of operation of said packaging device.

15. A label-issuing apparatus for printing on labels and attaching said printed labels on packaged products (70; 75) said apparatus characterized by a label printer (900) which prints on a label in coordination with supply of a packaged product and outputs said printed label, a label-attaching device (920) which can be moved between a first position adjacent said label printer (910) and a second position removed from said label printer (910), said label-attaching (920) receiving said printed label outputted by said label printer and attaching said received printed label on said packaged product when said label-attaching device (920) is at said first position, a detector (960) for detecting whether said label-attaching device is at said first or second position, and control means (800) for automatically causing said label printer (910) to be operable and said label-attaching device (920) to be disabled when said detector (960) detects said label-attaching device to be in said second position.

16. The label-issuing apparatus of claim 15 wherein said control means (800) also controls such that each of said labels travels a normal distance from said label printer (910) to said label-attaching device (920) if said label-attaching device (920) remains in said first position or in said second position, that the first of said labels to travel from said label printer (910) to said label-attaching device (920) after said detector (960) detects that said label-attaching device has moved from said first position to said second position is caused to travel a shorter distance than said normal distance such that a part of said first of said labels remains on said label printer (910), and that the first of said labels to travel from said label printer to said label-attaching device (920) after said detector (960) detects that said label-attaching device (920) has moved from said second position to said first position is caused to travel a longer distance than said normal distance such that no part of said first of said labels remains on said label printer.

Fig. 1

Fig. 2

Fig. 3

Fig. 5

EP 0 456 999 A2

Fig.4

Fig. 6

# FIG. 7

# FIG. 8

START

$L = \alpha T + \Delta T$ — S1

$M = L_c - L/2$ — S2

$N1 = L/E$ — S3

$N2 = L_o/E$ — S4

$N3 = M/E$ — S5

$n1 = N2$
$n2 = 0$ — S6

(I)

START FEED MOTOR, START BELT MOTOR — S7

DETECTOR SIGNAL ? — S8 — NO

YES

$n1 = n1 + 1$
$n2 = n_2$ — S9

$n1 = N1$ ? — S10 — No / YES

STOP FEED MOTOR, STOP BELT MOTOR — S11

CUTTER — S12

$n1 = 0$ — S13

START FEED MOTOR, START BELT MOTOR — S14

DETECTOR SIGNAL ? — S15 — NO

YES

$n1 = n1 + 1$
$n2 = n2 + 1$ — S16

$n1 = N2$ ? — S17 — No / YES

STOP FEED MOTOR, ACTIVATE CLAMP SOLENOID — S18

DETECTOR SIGNAL ? — S19 — No

YES

$n1 = n_1$
$n2 = n2 + 1$ — S20

$n2 = N3$ ? — No / YES — S21

DEACTIVATE CLAMP SOLENOID, STOP BELT MOTOR — S22

ALL DONE ? — S23 — No (I)

YES

END

Fig 9

**Fig. 10**

| PRODUCT No. |
| --- |
| TRAY No. |
| MODE |
| ⋮ |

**Fig. 12**

| TIME ZONE (8–9) | | |
| --- | --- | --- |
| MODE I | NUMBER WEIGHT PRICE | D-I |
| MODE II | NUMBER WEIGHT PRICE | D-II |
| MODE III | NUMBER WEIGHT | D-III |
| TIME ZONE (9–10) | | |
| ⋮ | | |

D

**Fig. 13**

| TRAY No. | |
| --- | --- |
| PACKAGING DATA  TRAY DIMENSIONS  TENSION ETC.  TRAY NAME  • JIS CODE  GP-1 | E |
| DAILY TOTAL | F |
| CUMULATIVE TOTAL | G |
| INITIAL | H |
| THRESHOLD | I |
| TRAY No. | |

**Fig. 11**

| PRODUCT No. | | | |
| --- | --- | --- | --- |
| PRODUCT DATA  • PRODUCT CODE  • UNIT PRICE  • TARE WEIGHT  PRODUCT NAME  • JIS CODE  " ROASTBEEF " | | | A |
| DAILY TOTAL | MODE I | TRAY No.  NUMBER  WEIGHT  PRICE  ⋮ | B-I |
| | MODE II | TRAY No.  NUMBER  WEIGHT  PRICE  ⋮ | B-II |
| | MODE III | TRAY No.  NUMBER  WEIGHT  ⋮ | B-III |
| CUMULATIVE TOTAL | I | SAM AS IN DAILY TOTAL AREA | C-I |
| | II | ″ | C-II |
| | III | ″ | C-III |
| PRODUCT No. | | | |
| ⋮ | | | |

B, C

Fig 14

Fig 16

SUM BY MODE

S41

MODE
?

II      III      I

S45

UPDATE AREAS
B-II AND C-II
FOR GIVEN
PRODUCT AND
TRAY NOS.

S42

UPDATE AREAS
B-I AND C-I
FOR GIVEN
PRODUCT AND
TRAY NOS.

S48

UPDATE AREAS
B-III AND C-III
FOR GIVEN
PRODUCT AND
TRAY NOS.

S46
CHECK TIME

S43
CHECK TIME

S49
CHECK TIME

S47
UPDATE AREA
D-II FOR RIGHT
TIME ZONE

UPDATE AREA
D-I FOR RIGHT
TIME ZONE
S44

UPDATE AREA
D-III FOR RIGHT
TIME ZONE

S50

RETURN

Fig 15

CYCLE COUNTER

S56
MODE
?

II

S57
$n = n1$ or
$n2$ ?

I, III

NO

S58
MESSAGE

YES

RETURN

Fig. 17

SUM BY MODE

CALL No. (    ?)

~802

Fig. 18

SUM BY MODE

CALL No. (23)

ROAST BEEF

~802

| TOTAL QT | TOTAL WT | TOTAL $ |
|---|---|---|
| 238 | 112030 | 35262 |

| MODE | QT | WT | $ |
|---|---|---|---|
| PACKAGING-PRICING | 63 | 31567 | 17456 |
| PRICING | 106 | 55048 | 17806 |
| PACKAGING | 69 | 25415 | — |

Fig. 19

31

SUM BY MODE, SUM BY TIME ZONE

MODE No. (   ?  )

1. PACKAGING - PRICING
2. PRICING
3. PACKAGING
4. ALL

— 802

Fig 20

SUM BY MODE, SUM BY TIME ZONE

MODE ( PACKAGING - PRICING )

— 802

| TOTAL QT | TOTAL WT | TOTAL $ |
|---|---|---|
| 3772 | 614836 | 1018684 |

| TIME ZONE | QT | WT | $ |
|---|---|---|---|
| 8 - 9 | 1071 | 174573 | 275044 |
| 9 - 10 | 583 | 95029 | 132428 |
| 1 - 2 | 397 | 64711 | 101868 |
| 3 - 4 | 1721 | 280523 | 509344 |

Fig. 21

SUM BY PRODUCT, TRAY

CALL No. (    ?)
MODE No. (    ?)

1. PACKAGING-PRICING
2. PRICING
3. PACKAGING
4. ALL

—802

Fig.22

SUM BY PRODUCT, TRAY                    —802

CALL No.(23)        MODE (PACKAGING-PRICNG)

| ROAST BEEF |
|---|

| TOTAL QT | TOTAL WT | TOTAL $ |
|---|---|---|
| 238 | 112030 | 352.62 |

| TRAY No. | QT | WT | $ |
|---|---|---|---|
| 32 | 109 | 16007 | 151.12 |
| 41 | 33 | 32008 | 50.37 |
| 58 | 96 | 64015 | 151.13 |

Fig.23

Fig. 25

SUM BY TRAY

TOTAL No. OF TRAYS USED : 3421

◇ TRAY No. (32)
   USED (482)
   BALANCE (4518)
◇ INITIAL (5000)
◇ THRESHOLD (500)

— 802

Fig. 24

**PRODUCT MASTER FILE**

| CALL No. |
| UNIT PRICE |
| TARE WEIGHT |
| TRAY No. |
| PRODUCT NAME |
| ⋮ |
| CALL No. |
| ⋮ |

Fig. 26

**TRAY MASTER FILE**

| TRAY No. |
| WIDTH |
| LENGTH |
| FILM LENGTH |
| HEIGHT |
| ROLL No. |
| ⋮ |
| TRAY No. |
| ⋮ |

Fig. 27

**ROLL MASTER FILE**

| ROLL No. |
| WIDTH |
| WEIGHT PER UNIT LENGTH |
| ⋮ |
| ROLL No. |
| ⋮ |

Fig. 28

Fig. 29

Fig. 34

Fig. 30A

Fig. 30B

Fig. 31

Fig. 32

Fig. 33

Fig. 35

38

Fig. 36

Fig.37

Fig. 38

Fig. 39A

Fig. 39B

Fig. 40

Fig. 41

Fig. 42

Fig. 43

Fig. 44

Fig. 45

Fig. 46

Fig. 47

Fig. 48